# FASCICULE DE BREVET EUROPEEN

(11) **EP 3 390 114 B1**
(45) Date de publication et mention de la délivrance du brevet: **30.10.2019**
(21) Numéro de dépôt: 16825849.9
(22) Date de dépôt: 15.12.2016
(51) Int. Cl.: B60C 17/04, B60C 17/06, B60C 7/12, B60C 7/14

(54) **ENSEMBLE POUR PNEUMATIQUE COMPRENANT DES TISSU(S) OU TRICOT(S) IMPRÉGNÉS ET UN MOYEN DE MAINTIEN SACRIFICIEL**
ANORDNUNG FÜR EINEN REIFEN MIT IMPRÄGNIERTEM GEWEBE ODER GEWIRK UND EINEM OPFERHALTEMITTEL
ASSEMBLY FOR TYRE INCLUDING IMPREGNATED WOVEN OR KNITTED FABRIC(S) AND A SACRIFICIAL HOLDING MEANS

(30) Priorité: 17.12.2015 FR 1562628
(43) Date de publication de la demande: 24.10.2018
(73) Titulaire: Compagnie Générale des Etablissements Michelin, 63000 Clermont-Ferrand (FR)
(72) Inventeur: RIGO, Sébastien, 63040 Clermont-ferrand Cedex 9 (FR); VILCOT, Florian, 63040 Clermont-ferrand Cedex 9 (FR); BEAULATON, Daniel, 63040 Clermont-ferrand Cedex 9 (FR); LIMOZIN, Bastien, 63040 Clermont-ferrand Cedex 9 (FR); FOMBELLE, Damien, 63040 Clermont-ferrand Cedex 9 (FR); BROUSSEAU, Magaly, 63040 Clermont-ferrand Cedex 9 (FR)
(74) Mandataire: Louret, Sylvain
(86) Numéro de dépôt international: PCT/FR2016/053449
(87) Numéro de publication internationale: WO 2017/103490

(56) Documents cités:
- CN-A- 101 318 450
- US-A- 1 426 763
- US-A- 2 506 861
- US-A- 4 157 107

## Description

L'invention a pour objet un ensemble pour pneumatique, un pneumatique et un procédé de fabrication d'un pneumatique.

L'invention concerne le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document US 4235270 décrit un pneumatique ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante. Une pluralité de parois, espacées selon la direction circonférentielle, s'étendent depuis la partie cylindrique radialement intérieure jusqu'à la partie cylindrique radialement extérieure, et assurent le port de la charge. En outre, des flancs peuvent relier les deux parties cylindriques respectivement radialement intérieure et radialement extérieure, pour former, en association avec la bande de roulement et les flancs, une cavité fermée et permettre ainsi la pressurisation du pneumatique. Un tel pneumatique a toutefois une masse élevée, par rapport à un pneumatique classique, et, en raison de son caractère massif, est susceptible de dissiper une énergie élevée, pouvant limiter son endurance, et donc sa durée de vie.

Le document WO 2009087291 décrit une structure pneumatique comprenant deux viroles annulaires respectivement interne, ou radialement intérieure, et externe, ou radialement extérieure, reliées par deux flancs et par une structure porteuse. Selon cette invention, la structure porteuse est pressurisée et partage le volume annulaire du pneumatique en une pluralité de compartiments ou d'alvéoles, et les flancs sont liés ou intégrés à la structure porteuse. Dans ce cas, la charge appliquée est portée à la fois par la structure porteuse et les flancs. La répartition de pression dans l'aire de contact n'est pas homogène dans la largeur axiale de l'aire de contact, avec des surpressions au niveau des épaules dues à la difficulté de mise à plat méridienne en raison de la liaison entre les flancs et la structure porteuse. Ces surpressions au niveau des épaules sont susceptibles de générer une usure importante des épaules de la bande de roulement.

Le document WO 2005007422 décrit une roue adaptative comprenant une bande adaptative et une pluralité de rayons s'étendant radialement vers l'intérieur depuis la bande adaptative jusqu'à un moyeu. La bande adaptative est destinée à s'adapter à la surface de contact avec un sol et à envelopper les obstacles. Les rayons transmettent la charge portée entre la bande adaptative et le moyeu, grâce à la mise en tension des rayons qui ne sont pas en contact avec le sol. Une telle roue adaptative nécessite une optimisation de la répartition des rayons pour garantir une périphérie sensiblement cylindrique. De plus, une roue adaptative a une masse relativement élevée par rapport à un pneumatique classique.

D'autres structures pneumatiques sont décrites dans les documents US1426763, US2506861, CN101318450.

La présente invention a pour objectif de proposer un ensemble pour pneumatique permettant une mise à plat améliorée de la bande de roulement, lorsque le pneumatique est soumis à une charge.

### Ensemble pour pneumatique selon l'invention

A cet effet, l'invention a pour objet un ensemble pour pneumatique, comprenant :
- un assemblage comprenant :
   - une première structure tissée ou tricotée imprégnée comprenant un premier tissu ou tricot et une première couche d'une première composition polymérique, le premier tissu ou tricot étant imprégné au moins en partie de la première composition polymérique ;
   - une deuxième structure tissée ou tricotée imprégnée comprenant un deuxième tissu ou tricot et une deuxième couche d'une deuxième composition polymérique, le deuxième tissu ou tricot étant imprégné au moins en partie de la deuxième composition polymérique ;
   - une structure porteuse comprenant des éléments porteurs reliant les premier et deuxième tissu(s) ou tricot(s) entre eux ;
- au moins un moyen sacrificiel de maintien temporaire des première et deuxième structures tissées ou tricotées imprégnées l'une par rapport à l'autre, reliant les premier et deuxième tissu(s) ou tricot(s) entre eux, le moyen sacrificiel étant agencé de façon à rompre avant les éléments porteurs lorsqu'on écarte les première et deuxième structures tissées ou tricotées imprégnées l'une de l'autre.

Le principe d'un ensemble pour pneumatique selon l'invention est d'avoir une structure porteuse comprenant des éléments porteurs reliant les premier et deuxième tissu(s) ou tricot(s), et capable, une fois l'ensemble agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

Le moyen sacrificiel permet, lors des différentes étapes du procédé de fabrication du pneumatique comprenant l'ensemble selon l'invention, de maintenir l'ensemble dans une forme géométrique constante, notamment la position relative des première et deuxième structures tissées ou tricotées imprégnées l'une par rapport à l'autre. Contrairement aux éléments porteurs qui, à l'issu du procédé de fabrication du pneumatique, ont une fonction de port de la charge, le moyen sacrificiel a une fonction de maintien temporaire car cette fonction disparait après rupture du moyen, cette rupture ayant lieu au moment opportun lors du procédé de fabrication du pneumatique, c'est-à-dire à partir du moment où le maintien de l'ensemble dans une forme géométrique constante n'est plus requis.

Chaque première et deuxième structure de l'assemblage peut comprendre un tissu ou un tricot imprégné par la composition polymérique correspondante. Ainsi, on peut envisager plusieurs modes de réalisation. Dans un mode de réalisation préféré, chaque structure comprend un tissu imprégnée par la composition polymérique correspondante. Dans un autre mode de réalisation, chaque structure comprend un tricot imprégné par la composition polymérique correspondante. Dans encore un autre mode de réalisation, la première structure comprend un tissu imprégné par la première composition polymérique et la deuxième structure comprend un tricot imprégné par la deuxième composition. Dans encore un autre mode de réalisation, la première structure comprend un tricot imprégné par la première composition polymérique et la deuxième structure comprend un tissu imprégné par la deuxième composition.

Par imprégnée, on entend que chaque composition polymérique pénètre au moins en surface le tissu ou le tricot. On peut donc avoir une imprégnation unifaciale avec une couverture d'une face du tissu ou du tricot par la composition polymérique ou une imprégnation bifaciale avec une couverture des deux faces du tissu ou du tricot par la composition polymérique. Dans les deux cas, l'imprégnation permet de créer un ancrage mécanique grâce à la pénétration de la composition polymérique dans les interstices présents dans le tissu ou le tricot.

Dans un mode de réalisation, chaque composition polymérique comprend au moins un élastomère, de préférence un élastomère diènique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver soit à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

Dans un mode de réalisation préféré, la structure porteuse comprend une pluralité d'éléments porteurs identiques, c'est-à-dire dont les caractéristiques géométriques et les matériaux constitutifs sont identiques.

Les éléments porteurs sont agencés de sorte qu'ils sont deux à deux non liés mécaniquement dans un espace délimité par les premier et deuxième tissu(s) ou tricot(s). Ainsi, les éléments porteurs ont des comportements mécaniques indépendants. Par exemple, les éléments porteurs ne sont pas liés entre eux de façon à former un réseau ou un treillis.

Avantageusement, les première et deuxième structures tissées ou tricotées imprégnées comprenant respectivement des première et deuxième faces externes sensiblement parallèles l'une à l'autre, le moyen sacrificiel est agencé de façon à rompre avant les éléments porteurs lorsqu'on écarte les première et deuxième structures tissées ou tricotées imprégnées l'une de l'autre selon une direction sensiblement perpendiculaire aux première et deuxième faces externes. Ainsi, la rupture peut être provoquée lors de la conformation du pneumatique utilisant l'ensemble selon l'invention, conformation durant laquelle on écarte les première et deuxième structures tissées ou tricotées imprégnées l'une de l'autre.

### Moyen sacrificiel de l'ensemble selon l'invention

Dans un mode de réalisation préféré, chaque moyen sacrificiel de maintien temporaire comprend un élément filaire sacrificiel de maintien temporaire. De tels éléments filaires sacrificiels de maintien temporaire forment un bâti temporaire.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

Préférentiellement, chaque élément filaire sacrificiel de maintien temporaire est textile, c'est-à-dire non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire sacrificiel de maintien temporaire est un assemblage textile comprenant plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir un assemblage dans lequel les fibres sont enroulées en hélice. Dans encore un autre mode de réalisation, chaque élément filaire sacrificiel est constitué d'un monofilament. Chaque fibre mono-filamentaire ou multi-filamentaire présente un diamètre compris entre 5 et 20 µm, par exemple 10 µm.

Dans un mode de réalisation, l'élément filaire sacrificiel de maintien temporaire s'étend alternativement du premier tissu ou tricot vers le deuxième tissu ou tricot et du deuxième tissu ou tricot vers le premier tissu ou tricot lorsqu'on se déplace le long de l'élément filaire sacrificiel de maintien temporaire. Encore plus préférentiellement, l'élément filaire sacrificiel de maintien temporaire est entrelacé avec chaque premier et deuxième tissu ou tricot. Ainsi, chaque élément filaire sacrificiel assure un maintien optimal des premier et deuxième tissu(s) ou tricot(s) l'un par rapport à l'autre.

Ainsi, dans un mode de réalisation préféré, l'élément filaire sacrificiel de maintien temporaire comprend :
- au moins une portion filaire de liaison des premier et deuxième tissu(s) ou tricot(s) l'un avec l'autre, et
- au moins des première et deuxième portions filaires de serrage prolongeant la portion filaire de liaison.

De préférence, les premières et deuxième portions filaires de serrage prolongent la portion filaire de liaison respectivement dans ou au contact de chaque premier et deuxième tissu(s) ou tricot(s).

Encore plus préférentiellement, chaque premier et deuxième tissu ou tricot étant un tissu comprenant des entrecroisements d'une première famille d'éléments filaires, sensiblement parallèles entre eux, et d'une deuxième famille d'éléments filaires, sensiblement parallèles entre eux, chaque première et deuxième portion filaire de serrage est enroulée au moins en partie autour d'au moins un élément filaire d'au moins une des première et deuxième familles d'éléments filaires respectivement de chaque premier et deuxième tissu.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

Préférentiellement, chaque élément filaire de chaque première et deuxième famille est textile, c'est-à-dire non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire de chaque première et deuxième famille est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire de chaque première et deuxième famille est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire de chaque première et deuxième famille est métallique, par exemple un assemblage de monofilaments métalliques, chaque monofilament métallique présentant un diamètre typiquement inférieur à 50 µm, par exemple 10 µm. Dans un mode de réalisation, chaque élément filaire de chaque première et deuxième famille est constitué d'un assemblage de plusieurs monofilaments métalliques. Dans un autre mode de réalisation, chaque élément filaire de chaque première et deuxième famille est constitué d'un monofilament métallique.

Encore plus préférentiellement, la première famille étant constituée d'éléments filaires de chaine et la deuxième famille étant constituée d'éléments filaires de trame, chaque première et deuxième portion filaire de serrage est enroulée au moins en partie autour d'éléments filaires de trame de chaque premier et deuxième tissu. Dans un autre mode de réalisation, chaque première et deuxième portion filaire de serrage est enroulée au moins en partie autour d'éléments filaires de chaine de chaque premier et deuxième tissu.

Lorsque l'assemblage ou l'ensemble est enroulé, par exemple sur une bobine de stockage, les éléments filaires de chaine sont sensiblement parallèles à la direction d'enroulage et de déroulage de l'assemblage ou de l'ensemble.

Dans un mode de réalisation avantageux, chaque élément porteur étant un élément filaire porteur comprenant :
- au moins une portion filaire porteuse s'étendant entre les premier et deuxième tissu(s) ou tricot(s), et
- au moins des première et deuxième portions filaires d'ancrage de l'élément filaire porteur respectivement dans les premier et deuxième tissu(s) ou tricot(s), prolongeant la portion filaire porteuse respectivement dans les premier et deuxième tissu(s) ou tricot(s),
chaque élément filaire sacrificiel de maintien temporaire et chaque élément porteur est agencé de sorte que :
- à la rupture de chaque élément filaire sacrificiel de maintien temporaire, on atteint la longueur de rupture de la portion filaire de liaison, et
- la force à rupture surfacique (Fs') des portions filaires de liaison est inférieure à la force à rupture surfacique (Fs) des portions filaires porteuses.

Ainsi, on assure, de par les propriétés mécaniques de chaque élément filaire sacrificiel de maintien temporaire et de par les propriétés mécaniques des éléments porteurs, que la rupture de chaque élément filaire sacrificiel de maintien temporaire n'entraine pas la rupture des éléments filaires porteurs.

Par définition, la longueur de rupture de la portion filaire de liaison est égale au produit de la longueur à vide de la portion filaire de liaison, c'est-à-dire la longueur maximale de la portion sans qu'aucune tension ne soit exercée sur la portion, et de la somme (1+Ar') où Ar' est l'allongement à rupture de la portion filaire de liaison.

Par définition, la force à rupture surfacique des portions filaires de liaison est le produit de la densité surfacique moyenne de portions filaires de liaison par unité de surface de la première structure tissée ou tricotée imprégnée et de la force à rupture de chaque portion filaire de liaison. De façon analogue, la force à rupture surfacique des portions filaires porteuse est le produit de la densité surfacique moyenne de portions filaires porteuses par unité de surface de la première structure tissée ou tricotée imprégnée et de la force à rupture de chaque portion filaire porteuse.

### Eléments porteurs de l'ensemble selon l'invention

Dans un mode de réalisation préféré, chaque élément porteur est un élément filaire porteur.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

Un élément filaire porteur, notamment la portion porteuse, présente typiquement une plus petite dimension caractéristique E de sa section moyenne S_{P} (qui est la moyenne des sections obtenues par la coupe de l'élément filaire porteur par toutes les surfaces parallèles aux premier et deuxième tissu(s) ou tricot(s) et comprises entre les premier et deuxième tissu(s) ou tricot(s)) préférentiellement au plus égale à 0.02 fois l'espacement maximal entre les deux faces internes des premier et deuxième tissu(s) ou tricot(s) (qui correspond à la hauteur radiale moyenne H de l'espace annulaire intérieur une fois l'ensemble agencé au sein du pneumatique) et un rapport de forme K de sa section moyenne S_{P} préférentiellement au plus égal à 3. Une plus petite dimension caractéristique E de la section moyenne S_{P} de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue. Un rapport de forme K de sa section moyenne S_{P} au plus égal à 3 signifie que la plus grande dimension caractéristique L de sa section moyenne S_{P} est au plus égale à 3 fois la plus petite dimension caractéristique E de sa section moyenne S_{P}.

Un élément porteur filaire a un comportement mécanique de type filaire, c'est-à-dire qu'il ne peut être soumis qu'à des efforts d'extension ou de compression selon sa ligne moyenne.

Il est à noter que tous les éléments porteurs filaires d'une structure porteuse n'ont pas nécessairement des longueurs L_{P} identiques.

Préférentiellement, chaque élément filaire porteur est textile, c'est-à-dire non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire porteur est métallique, par exemple un assemblage de monofilaments métalliques, chaque monofilament métallique présentant un diamètre typiquement inférieur à 50 µm, par exemple 10 µm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement du premier tissu ou tricot vers le deuxième tissu ou tricot et du deuxième tissu ou tricot vers le premier tissu ou tricot lorsqu'on se déplace le long de l'élément filaire porteur.

Encore plus préférentiellement, chaque élément filaire porteur est entrelacé avec chaque premier et deuxième tissu ou tricot. Un tel assemblage présente l'avantage de pouvoir être fabriqué en une seule étape de tissage. Toutefois, il est également possible d'envisager de fabriquer l'assemblage en deux étapes, une première étape de fabrication des premier et deuxième tissu(s) ou tricot(s) et une deuxième étape d'entrelacement du ou des éléments filaires porteurs avec les premier et deuxième tissu(s) ou tricot(s). Dans les deux cas, l'entrelacement de chaque élément porteur avec chaque premier et deuxième tissu ou tricot permet d'assurer l'ancrage mécanique de chaque élément porteur dans chaque premier et deuxième tissu ou tricot et ainsi de conférer les propriétés mécaniques souhaitées à la structure porteuse.

De préférence, l'élément filaire porteur comprend :
- au moins une portion filaire porteuse s'étendant entre les premier et deuxième tissu(s) ou tricot(s), et
- au moins des première et deuxième portions filaires d'ancrage de l'élément filaire porteur respectivement dans les premier et deuxième tissu(s) ou tricot(s), prolongeant la portion filaire porteuse respectivement dans les premier et deuxième tissu(s) ou tricot(s).

Chaque portion filaire porteuse qui relie les faces internes des premier et deuxième tissu(s) ou tricot(s) l'une à l'autre peut être caractérisée géométriquement par sa longueur L_{P} et par sa section moyenne S_{P}, qui est la moyenne des sections obtenues par la coupe de la portion filaire porteuse par toutes les surfaces parallèles aux premier et deuxième tissu(s) ou tricot(s) et comprises entre les premier et deuxième tissu(s) ou tricot(s). Dans le cas le plus fréquent d'une section constante de l'élément porteur et la portion filaire porteuse, la section moyenne S_{P} est égale à cette section constante.

La section moyenne S_{P} de chaque portion filaire porteuse comprend une plus grande dimension caractéristique L et une plus petite dimension caractéristique E, dont le rapport K=L/E est appelé rapport de forme. A titre d'exemples, une section moyenne S_{P} circulaire, ayant un diamètre égal à d, a un rapport de forme K=1, une section moyenne S_{P} rectangulaire, ayant une longueur L et une largeur l, a un rapport de forme K=L/I, et une section moyenne S_{P} elliptique, ayant un grand axe A et un petit axe a, a un rapport de forme K=A/a.

Ainsi, dans un mode de réalisation préféré, chaque premier et deuxième tissu ou tricot étant un tissu comprenant des entrecroisements d'une première famille d'éléments filaires, sensiblement parallèles entre eux, et d'une deuxième famille d'éléments filaires, sensiblement parallèles entre eux, chaque première et deuxième portion filaire d'ancrage est enroulée au moins en partie autour d'au moins un élément filaire d'au moins une des première et deuxième familles d'éléments filaires respectivement de chaque premier et deuxième tissu.

Encore plus préférentiellement, la première famille étant constituée d'éléments filaires de chaine et la deuxième famille étant constituée d'éléments filaires de trame, chaque première et deuxième portion filaire d'ancrage est enroulée au moins en partie autour d'éléments filaires de trame de chaque premier et deuxième tissu. Dans un autre mode de réalisation, chaque première et deuxième portion filaire d'ancrage est enroulée au moins en partie autour d'éléments filaires de chaine de chaque premier et deuxième tissu.

### Premier et deuxième tissu(s) ou tricot(s) de l'ensemble selon l'invention

Dans un mode de réalisation préférentiel, le premier tissu ou tricot est un tissu comprenant des entrecroisements d'une première famille d'éléments filaires, sensiblement parallèles entre eux, et d'une deuxième famille d'éléments filaires, sensiblement parallèles entre eux.

Dans un mode de réalisation préférentiel, le deuxième tissu ou tricot est un tissu comprenant des entrecroisements d'une première famille d'éléments filaires, sensiblement parallèles entre eux, et d'une deuxième famille d'éléments filaires, sensiblement parallèles entre eux.

Dans ces modes de réalisation préférentiels, le tissu comprend, de manière connue pour l'homme du métier, une armure caractérisant l'entrecroisement des éléments filaires des première et deuxième familles. Selon les modes de réalisation, cette armure est de type toile, serge ou satin. De façon préférée, afin de conférer des bonnes propriétés mécaniques dans une utilisation en pneumatique, l'armure est de type toile.

De préférence, les éléments filaires de la première famille s'étendant selon première direction et les éléments filaires de la deuxième famille s'étendant selon une deuxième direction, les premières et deuxièmes directions forment l'une avec l'autre un angle allant de 70° à 90°.

Dans un autre mode de réalisation, chaque premier et deuxième tissu ou tricot est un tricot comprenant des boucles entrelacées.

Les caractéristiques mécaniques de tels tissus telles que leur rigidité en extension et leur force à rupture en traction, selon le sens des éléments filaires de la première famille ou celui des éléments filaires de la deuxième famille, dépendent des caractéristiques des éléments filaires, telles que, pour des éléments filaires textiles, le titre, exprimé en tex ou g/1000 m, la ténacité, exprimée en cN/ tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

De préférence, le premier tissu s'étendant selon une direction générale principale, les éléments filaires d'au moins une des première et deuxième familles s'étendent selon une direction formant, avec la direction générale principale du premier tissu, un angle au moins égal à 10° et au plus égal à 45°. Encore plus préférentiellement, la première famille étant constituée d'éléments filaires de chaine et la deuxième famille étant constituée d'éléments filaires de trame, les éléments filaires de chaine forment un angle au moins égal à 10° et au plus égal à 45° avec la direction principale du premier tissu. Encore plus préférentiellement, les éléments filaires de trame forment un angle au moins égal à 10° et au plus égal à 45° avec la direction principale du premier tissu.

De préférence, le deuxième tissu s'étendant selon une direction générale principale, les éléments filaires d'au moins une des première et deuxième familles s'étendent selon une direction formant, avec la direction générale principale du deuxième tissu, un angle au moins égal à 10° et au plus égal à 45°. Encore plus préférentiellement, la première famille étant constituée d'éléments filaires de chaine et la deuxième famille étant constituée d'éléments filaires de trame, les éléments filaires de chaine forment un angle au moins égal à 10° et au plus égal à 45° avec la direction principale du deuxième tissu. Encore plus préférentiellement, les éléments filaires de trame forment un angle au moins égal à 10° et au plus égal à 45° avec la direction principale du deuxième tissu.

Par direction générale principale, on entend la direction générale selon laquelle s'étend le tissu selon sa plus grande longueur.

Dans un mode de réalisation particulièrement avantageux, chaque élément filaire sacrificiel, chaque élément filaire porteur et chaque élément filaire des première et deuxième familles d'élément filaires de chaque premier et deuxième tissu sont constitué du même matériau filaire. Cela permet d'une part une standardisation de fabrication du matériau et d'autre part une fabrication plus simple de l'ensemble.

### Pneumatique selon l'invention

L'invention a également pour objet un pneumatique comprenant :
- un assemblage comprenant :
   - une première structure tissée ou tricotée imprégnée comprenant un premier tissu ou tricot et une première couche d'une première composition polymérique, le premier tissu ou tricot étant imprégné au moins en partie de la première composition polymérique ;
   - une deuxième structure tissée ou tricotée imprégnée comprenant un deuxième tissu ou tricot et une deuxième couche d'une deuxième composition polymérique, le deuxième tissu ou tricot étant imprégné au moins en partie de la deuxième composition polymérique ;
   - une structure porteuse comprenant des éléments porteurs reliant les premier et deuxième tissu(s) ou tricot(s) entre eux ;
- un moyen sacrificiel de maintien temporaire des première et deuxième structures tissées ou tricotées imprégnées l'une par rapport à l'autre, le moyen sacrificiel de maintien temporaire étant rompu.

Une fois le pneumatique fabriqué, le moyen sacrificiel n'est plus nécessaire et donc est visible sous un état rompu, par exemple sous la forme de deux parties complémentaires. Les éléments porteurs assurent alors le port de la charge appliquée au pneumatique ainsi que les autres fonctions mécaniques classiques du pneumatique.

Conformément à l'invention, le pneumatique comprend:
- une première structure de révolution formée par la première structure tissée ou tricotée imprégnée ;
- une deuxième structure de révolution formée par la deuxième structure tissée ou tricotée imprégnée agencée radialement à l'intérieur de la première structure de révolution ;
- une structure de révolution de sommet agencée radialement à l'extérieur de la première structure de révolution ;
- un espace annulaire intérieur délimité par une face interne de la première structure de révolution et une face interne de la deuxième structure de révolution ;
- deux flancs reliant entre elles chaque extrémité axiale de la première structure de révolution radialement extérieure et chaque extrémité axiale de la deuxième structure de révolution, les deux flancs délimitant l'espace annulaire intérieur; l'espace annulaire intérieur formant une cavité fermée pouvant être pressurisée par un gaz de gonflage.

La deuxième structure tissée ou tricotée imprégnée formant la deuxième structure de révolution radialement intérieure du pneumatique est destinée à assurer, entre autres fonctions, la liaison de l'assemblage, et donc du pneumatique, avec le moyen de montage. La première structure tissée ou tricotée imprégnée formant la première structure de révolution radialement extérieure du pneumatique est destinée à assurer, entre autres fonctions, la liaison de l'assemblage avec la structure de révolution de sommet.

De façon préférentielle, chaque flanc ayant une longueur curviligne L_{F}, la longueur curviligne L_{F} de chaque flanc est avantageusement au moins égale à 1.05 fois, de préférence, 1.15 fois la hauteur radiale moyenne H de l'espace annulaire intérieur. Encore plus avantageusement, la longueur curviligne L_{F} de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du dispositif de type pneumatique en raison d'une trop faible courbure.

Avantageusement, les flancs ne sont pas liés directement à l'assemblage et de préférence ne sont pas liés directement aux éléments porteurs. Les flancs participent en partie au port de la charge, selon leur propre rigidité structurelle. Toutefois, les flancs ont un comportement mécanique indépendant et n'interfèrent pas dans le comportement mécanique de la structure porteuse. Les flancs comprennent généralement au moins un matériau élastomérique et peuvent comprendre éventuellement une armature de renforcement.

Dans le cas d'une pressurisation effective par un gaz de gonflage, le pneumatique présente alors une rigidité pneumatique, due à la pression, qui va également contribuer au port de la charge appliquée. Usuellement, pour une utilisation sur un véhicule de tourisme, la pression est au moins égale à 0.5 bar, de préférence au moins égale à 1 bar. Plus la pression est élevée, plus la contribution de la rigidité pneumatique au port de la charge appliquée est élevée, et, corrélativement, plus la contribution de la rigidité structurelle de la structure porteuse et/ou des flancs et/ou des structures de révolution respectivement radialement extérieure et radialement intérieure au port de la charge appliquée est faible. En l'absence de pressurisation et dans le cas d'une faible rigidité structurelle des flancs, la structure porteuse et les structures de révolution respectivement radialement extérieure et radialement intérieure seraient amenées à assurer la quasi-totalité du port de la charge, les flancs ne jouant principalement qu'un rôle de protection vis-à-vis des agressions éventuelles par des éléments extérieurs au pneumatique.

La première structure tissée ou tricotée imprégnée formant la première structure de révolution radialement extérieure du pneumatique présente un axe de révolution confondu avec l'axe de rotation du pneumatique. La deuxième structure tissée ou tricotée imprégnée formant la deuxième structure de révolution radialement intérieure du pneumatique est coaxiale à la première structure tissée ou tricotée imprégnée formant la première structure de révolution radialement extérieure du pneumatique.

L'espace annulaire intérieur a une hauteur radiale moyenne H. Lorsque le pneumatique est soumis à une charge radiale nominale Z_{N} et est en contact avec un sol plan par une surface de contact A, les éléments porteurs, reliés à la portion de la première structure tissée ou tricotée imprégnée formant la première structure de révolution radialement extérieure du pneumatique en contact avec le sol par l'intermédiaire du premier tissu ou tricot, sont soumis à un flambage en compression et au moins une partie des éléments porteurs, reliés à la portion de première structure tissée ou tricotée imprégnée formant la première structure de révolution radialement extérieure du pneumatique non en contact avec le sol, sont en tension.

Afin de supporter la charge appliquée, la densité surfacique moyenne D de portions filaires porteuses par unité de surface de la première structure tissée ou tricotée imprégnée formant la première structure de révolution radialement extérieure, exprimée en 1/m2, est au moins égale à (S/S_{E})^{∗}Z/(A^{∗}Fr), où S est la surface, en m2, de la face radialement intérieure de la structure de révolution de sommet, S_{E} est la surface de liaison entre la face externe de la première structure tissée ou tricotée imprégnée formant la première structure de révolution radialement extérieure (qui est la face externe de la première bande) et la face radialement intérieure de la structure de révolution de sommet, en m2, Z_{N} est la charge radiale nominale, en N, appliquée au pneumatique, A est la surface de contact au sol, en m2, du pneumatique, et Fr la force à rupture, en N, de chaque portion porteuse. La charge radiale nominale Z_{N} est la charge recommandée pour l'utilisation du pneumatique. La surface de contact au sol A est la surface selon laquelle le pneumatique est écrasé sur le sol sous l'action de la charge radiale nominale Z_{N}.

L'expression selon laquelle D est au moins égale à (S/S_{E})^{∗}Z/(A^{∗}Fr) traduit, en particulier, le fait que la densité surfacique moyenne D des portions porteuses est d'autant plus forte que la charge radiale nominale Z_{N} élevée et/ou que le rapport de surfaces S_{E}/S, représentant le taux de recouvrement de la face radialement intérieure de la structure de révolution de sommet par la première structure tissée ou tricotée imprégnée formant la première structure de révolution radialement extérieure, est faible. La densité surfacique moyenne D des portions porteuses est d'autant plus faible que la force à rupture en traction Fr d'une portion porteuse est élevée.

Une telle densité surfacique moyenne D des portions porteuses permet, d'une part, aux éléments porteurs en extension en dehors de l'aire de contact de porter la charge radiale nominale Z_{N}, et, d'autre part, aux éléments porteurs en compression dans l'aire de contact de garantir une mise à plat de la bande de roulement, à la fois dans un plan circonférentiel et dans un plan méridien, améliorée par rapport aux pneumatiques connus de l'état de la technique.

Généralement, la densité surfacique des portions porteuses est constante à la fois selon la direction circonférentielle et selon la direction axiale, c'est-à-dire que la répartition des portions porteuses est uniforme à la fois circonférentiellement et axialement : la densité surfacique moyenne D est donc égale à la densité surfacique constante. L'avantage d'une densité surfacique constante est de contribuer à conférer à la bande de roulement une géométrie quasi cylindrique, avec un effet dit de « mise en marguerite » diminué par rapport à d'autres pneumatiques de l'état de la technique.

Toutefois, dans certains modes de réalisation, la densité surfacique des portions porteuses peut être variable selon la direction circonférentielle et/ou selon la direction axiale, c'est-à-dire que la répartition des portions porteuses n'est pas nécessairement uniforme circonférentiellement et/ou axialement, d'où l'introduction de la caractéristique de densité surfacique moyenne D de portions porteuses.

La densité surfacique D des portions porteuses, exprimée en 1/m2, est avantageusement au moins égale à 3^{∗}(S/S_{E})^{∗}Z/ (A^{∗}Fr). Une densité surfacique plus élevée de portions porteuses améliore l'homogénéisation des pressions dans l'aire de contact au sol et garantit un coefficient de sécurité plus élevé vis-à-vis de la charge appliquée et vis-à-vis de l'endurance.

La densité surfacique D des portions porteuses, exprimée en 1/m2, est encore plus avantageusement au moins égale à 6^{∗}(S/S_{E})^{∗}Z/(A^{∗}Fr). Une densité surfacique encore plus élevée de portions porteuses améliore encore davantage l'homogénéisation des pressions dans l'aire de contact au sol et permet d'augmenter encore le coefficient de sécurité vis-à-vis de la charge appliquée et vis-à-vis de l'endurance.

La densité surfacique moyenne D des portions porteuses, exprimée en 1/m2, est avantageusement au moins égale à 5000.

Dans certains modes de réalisation, la surface SE est sensiblement égale à la surface S, c'est-dire que la première structure tissée ou tricotée imprégnée formant la première structure de révolution radialement extérieure au premier tissu ou tricot recouvre intégralement la face radialement intérieure de la structure de révolution de sommet. Dans ces conditions, la densité surfacique moyenne D des portions porteuses minimale est égale à Z/(A^{∗}Fr).

Dans d'autres modes de réalisation, S_{E} est différente de S et même S_{E}<S. En effet, la première structure tissée ou tricotée imprégnée n'est pas obligatoirement continue (axialement et/ou circonférentiellement) et peut être constituée de portions de tissu ou tricot juxtaposées : dans ce cas, la surface S_{E} est la somme des surfaces de liaison entre les faces externes de la première structure tissée ou tricotée imprégnée formant la première structure de révolution radialement extérieure (qui sont les faces externes de la première couche) et la face radialement intérieure de la structure de révolution de sommet. Ainsi, quand S_{E}<S, la première structure tissée ou tricotée imprégnée formant la première structure de révolution radialement extérieure au premier tissu ou tricot ne recouvre pas intégralement c'est-à-dire ne recouvre que partiellement, la face radialement intérieure de la structure de révolution de sommet.

Cette conception permet avantageusement d'avoir un assemblage pouvant être fabriquée de façon indépendante et intégrée d'un seul bloc lors de la fabrication du pneumatique. L'assemblage utilisé peut être solidarisé à d'autres éléments du pneumatique par vulcanisation, collage ou tout autre procédé de liaison des première et deuxième couches des première et deuxième compositions polymériques.

Le premier tissu ou tricot radialement extérieur et le deuxième tissu ou tricot radialement intérieur servent d'interfaces entre les éléments porteurs et les structures de révolution respectivement radialement extérieure et radialement intérieure qui ne sont donc pas en contact direct.

Grâce au pneumatique décrit, on observe une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du pneumatique.

On observe également une augmentation des fréquences propres de vibrations du pneumatique, ce qui contribue à l'amélioration du confort vibratoire et acoustique du pneumatique.

Enfin, la résistance au roulement d'un tel pneumatique est sensiblement diminuée, ce qui est favorable à une baisse de la consommation de carburant du véhicule.

### Ensemble monté selon l'invention

L'invention a également pour objet un ensemble monté comprenant un pneumatique tel que défini ci-dessus monté sur un moyen de montage de l'ensemble monté sur un véhicule.

Le moyen de montage est par exemple une jante. De préférence, le moyen de montage comprend une face coopérant avec une face externe de l'ensemble selon l'invention. Les deux faces coopérante sont maintenues au contact l'une de l'autre, par exemple par collage ou bien par les forces de pression résultant du gonflage du pneumatique.

### Procédé de fabrication selon l'invention

L'invention a encore pour objet un procédé de fabrication d'un pneumatique tel que défini précédemment, dans lequel :
- on enroule autour d'un cylindre de confection sensiblement de révolution autour d'un axe de révolution un ensemble tel que défini ci-dessus ; et
- on écarte radialement par rapport à l'axe de révolution au moins une des première et deuxième structures tissées ou tricotées imprégnées de façon à rompre le moyen sacrificiel de maintien temporaire.

Ainsi, lors de l'écartement d'au moins l'une des première et deuxième structures tissées ou tricotées imprégnées par rapport l'axe de révolution, le moyen sacrificiel rompt et permet aux éléments porteurs d'assurer le port de la charge appliquée au pneumatique.

Dans un mode de réalisation, le pneumatique comprenant :
- une première structure de révolution formée par la première structure tissée ou tricotée imprégnée ;
- une deuxième structure de révolution formée par la deuxième structure tissée ou tricotée imprégnée agencée radialement à l'intérieur de la première structure de révolution ;
- un espace annulaire intérieur délimité par une face interne de la première structure de révolution et une face interne de la deuxième structure de révolution ;
- deux flancs reliant entre elles chaque extrémité axiale de la première structure de révolution et chaque extrémité axiale de la deuxième structure de révolution, les deux flancs délimitant l'espace annulaire intérieur ; l'espace annulaire intérieur formant une cavité fermée pouvant être pressurisée par un gaz de gonflage ;
au cours du procédé:
- on forme l'espace annulaire intérieur ;
- on déploie l'espace annulaire intérieur de façon à rompre le moyen sacrificiel de maintien temporaire.

De préférence, pour former l'espace annulaire intérieur, on joint chaque flanc à chaque extrémité axiale des première et deuxième structures de révolution de façon à constituer l'espace annulaire intérieur.

Avantageusement, on déploie l'espace annulaire intérieur par pressurisation par un gaz de gonflage de l'espace annulaire intérieur.

De façon préférée, après le déploiement de l'espace annulaire intérieur, on enroule une structure de révolution de sommet radialement à l'extérieur de la première structure de révolution.

L'invention sera mieux comprise à la lecture de la description qui va suivre, donnée uniquement à titre d'exemple non limitatif et faite en se référant aux dessins dans lesquels:
- la figure 1 est une vue en perspective et en coupe partielle d'un pneumatique selon un premier mode de réalisation de l'invention ;
- la figure 2 est une vue en coupe circonférentielle du pneumatique de la figure 1, dans l'état écrasé ;
- la figure 3 est une vue en coupe méridienne du pneumatique de la figure 1 ;
- la figure 4 est une vue de dessus d'un des tissus d'un ensemble selon l'invention ;
- la figure 5 est une vue en coupe de l'ensemble selon l'invention de la figure 4 selon un plan de coupe P-P ;
- la figure 6 est une vue d'un élément porteur d'une structure porteuse du pneumatique de la figure 1 ;
- la figure 7 est une vue en coupe méridienne partielle du pneumatique de la figure 1 permettant de voir une partie de l'ensemble des figures 4 et 5 après fabrication du pneumatique ;
- la figure 8 illustre des courbes-types comparées de l'évolution de la charge appliquée en fonction de la flèche pour le pneumatique de la figure 1 et un pneumatique de référence de l'état de la technique ;
- la figure 9 illustre des courbes-types comparées de l'évolution de la rigidité de dérive en fonction de la charge appliquée pour le pneumatique de la figure 1 et un pneumatique de référence de l'état de la technique ;
- les figures 10A à 10C illustrent le déploiement de l'ensemble selon l'invention lors du procédé de fabrication selon l'invention ;
- la figure 11 est une vue analogue à celle de la figure 1 d'un pneumatique selon un deuxième mode de réalisation de l'invention ;
- la figure 12 est une vue analogue à celle de la figure 7 du pneumatique de la figure 11.

### EXEMPLES DE PNEUMATIQUES SELON L'INVENTION

Dans les figures, on a représenté un repère X, Y, Z correspondant aux orientations habituelles respectivement axiale (selon la direction YY'), radiale (selon la direction ZZ') et circonférentielle (selon la direction XX') d'un pneumatique.

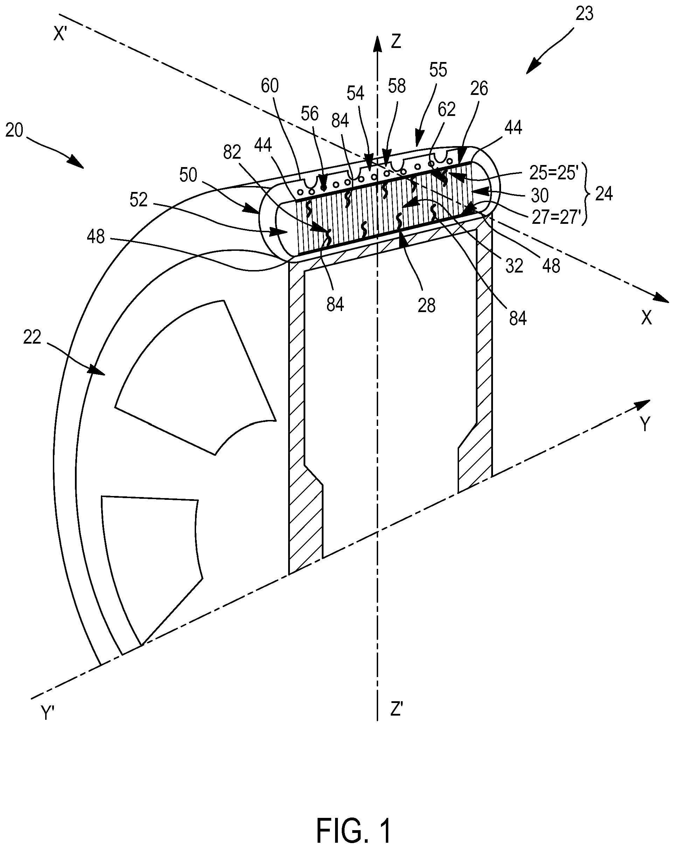

On a représenté sur la figure 1 un pneumatique conforme à un premier mode de réalisation de l'invention et désigné par la référence générale 20. Le pneumatique 20 est sensiblement de révolution autour d'un axe sensiblement parallèle à la direction axiale YY'. Le pneumatique 20 est ici destiné à un véhicule de tourisme. Sur la figure 1, le pneumatique 20 est monté sur un moyen de montage 22, ici une jante, formant ainsi un ensemble monté 23 selon l'invention pour véhicule.

Le pneumatique 20 comprend un assemblage 24 comprenant une première structure tissée ou tricotée imprégnée 25 et une deuxième structure tissée ou tricotée imprégnée 27. La deuxième structure tissée ou tricotée imprégnée 27 est agencée radialement à l'intérieur par rapport à la première structure tissée imprégnée 25. En l'espèce, chaque première et deuxième structure 25, 27 est une structure tissée imprégnée. En variante, chaque première et deuxième structure 25, 27 est une structure tricotée imprégnée.

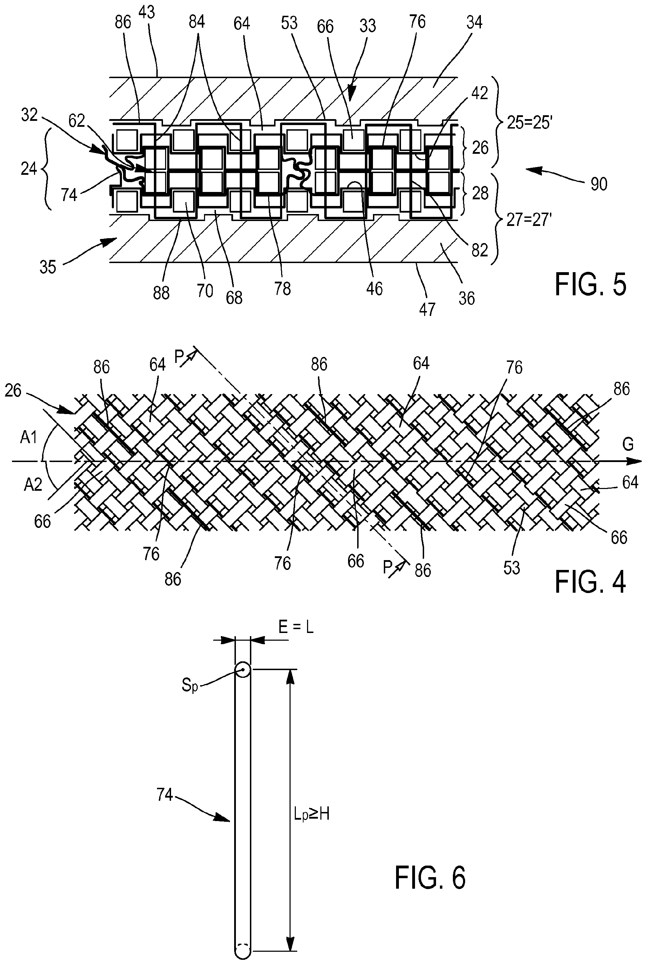

Comme illustré sur la figure 5, la première structure tissée imprégnée 25 comprend un premier tissu ou tricot 26, ici un tissu 26, et une première couche 33 d'une première composition polymérique 34, le premier tissu 26 étant imprégné au moins en partie de la première composition polymérique 34. La deuxième structure tissée imprégnée 27 comprend un deuxième tissu ou tricot 28, ici un tissu 28, et une deuxième couche 35 d'une deuxième composition polymérique 36, le deuxième tissu 28 étant imprégné au moins en partie de la deuxième composition polymérique 36. En variante, chaque première et deuxième structure 25, 27 comprend un tricot imprégné au moins en partie respectivement par chaque composition polymérique 34, 36.

Dans le pneumatique 20, le premier tissu 26 est agencé radialement à l'extérieur par rapport au deuxième tissu 28. Chaque première et deuxième composition polymérique 34, 36 comprend par exemple une composition élastomérique comprenant au moins un élastomère, de préférence diénique, par exemple du caoutchouc naturel.

Au sein du pneumatique 20, la première structure tissée imprégnée 25 forme une première structure de révolution 25' et la deuxième structure tissée imprégnée 27 forme une deuxième structure de révolution 27' agencée radialement à l'intérieur de la première structure de révolution 25'.

L'assemblage 24 comprend également une structure porteuse 30 comprenant des éléments porteurs 32 reliant les premier et deuxième tissus 26, 28 entre eux. La structure porteuse 30 est ici constituée d'une pluralité d'éléments porteurs 32.

De plus, le pneumatique 20 comprend une structure de révolution de sommet 55 agencée radialement à l'extérieur de la première structure tissée imprégnée 25 formant la première structure de révolution radialement extérieure 25'. La structure de révolution de sommet 55 comprend une armature circonférentielle de renforcement 54 et une bande de roulement 58 comme illustré sur les figures 1 et 5. La structure de révolution de sommet 55 comprend une face radialement intérieure 59 et une face radialement extérieure 60 formée par la face extérieure de la bande de roulement 58.

L'armature circonférentielle de renforcement 54 comprend une composition polymérique, par exemple une composition élastomérique comprenant au moins un élastomère, de préférence diénique, par exemple du caoutchouc naturel, dans laquelle sont noyés plusieurs éléments de renforts métalliques ou textiles 56, connus de l'homme du métier.

L'armature circonférentielle de renforcement 54 est agencée radialement à l'extérieur de la première structure tissée imprégnée 25 formant la première structure de révolution radialement extérieure 25' du pneumatique 20. La bande de roulement 58 est destinée à entrer en contact avec un sol. La bande de roulement 58 est constituée d'une composition polymérique, par exemple une composition élastomérique comprenant au moins un élastomère, de préférence diénique, par exemple du caoutchouc naturel. La bande de roulement 58 est agencée radialement à l'extérieur de l'armature circonférentielle de renforcement 54.

Comme illustré sur les figures 1 et 5, la première structure tissée imprégnée 25 formant la première structure de révolution radialement extérieure 25' du pneumatique 20, la deuxième structure tissée imprégnée 27 formant la deuxième structure de révolution radialement intérieure 27' du pneumatique 20, la structure de révolution de sommet 55 présentent un axe de révolution commun, en l'espèce l'axe de rotation YY' du pneumatique 20.

La première structure tissée imprégnée 25 formant la première structure de révolution radialement extérieure 25' du pneumatique 20 présente une face interne 42 et une face externe 43 ainsi que deux extrémités axiales 44. La face interne 42 est une face interne du premier tissu 26 et la face externe 43 est une face externe de la première couche 33. Au sein du pneumatique 20, la face interne 42 est agencée radialement à l'intérieur de la face externe 43 et la face externe 43 est au contact d'une face radialement intérieure de la structure de révolution de sommet 55.

La deuxième structure tissée imprégnée 27 formant la deuxième structure de révolution radialement intérieure 27' du pneumatique 20 présente une face interne 46 et une face externe 47 ainsi que deux extrémités axiales 48. La face interne 46 est une face interne du deuxième tissu 28 et la face externe 47 est une face externe de la deuxième couche 35. Au sein du pneumatique 20, la face interne 46 est agencée radialement à l'extérieur de la face externe 47.

Les deux faces 42 et 46 sont en regard l'une de l'autre et sensiblement parallèle l'une à l'autre. Au sein du pneumatique 20, chaque surface 42, 46 décrit un cylindre de révolution autour de l'axe YY' du pneumatique 20.

En référence à la figure 1, le pneumatique 20 comprend également deux flancs 50. Chaque flanc 50 relie entre elles chaque extrémité axiale 44 de la première structure tissée imprégnée 25 formant la première structure de révolution radialement extérieure 25' du pneumatique 20 et chaque extrémité axiale 48 de la deuxième structure tissée imprégnée 27 formant la deuxième structure de révolution radialement intérieure 27' du pneumatique 20.

Le pneumatique 20 comprend également un espace annulaire intérieur 52 délimité d'une part, par chaque face interne 42 et 46 et, d'autre part, par les deux flancs 50. L'espace annulaire intérieur 52 forme une cavité fermée pouvant être pressurisé par un gaz de gonflage, par exemple de l'air. Les éléments porteurs 32 sont deux à deux indépendants dans l'espace annulaire intérieur 52.

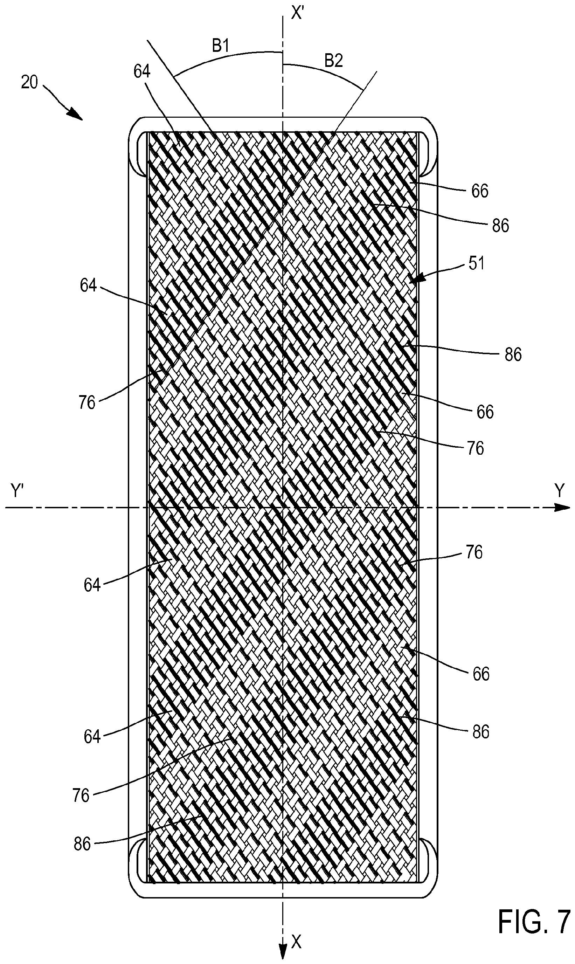

Dans ce premier mode de réalisation, l'assemblage 24 s'étend axialement de façon continue entre les deux flancs 50 du pneumatique 20. L'assemblage 24 s'étend circonférentiellement sur un tour autour de l'axe de révolution YY' du pneumatique 20 de façon à former une bande d'assemblage 51 axialement continue comme illustré sur la figure 7.

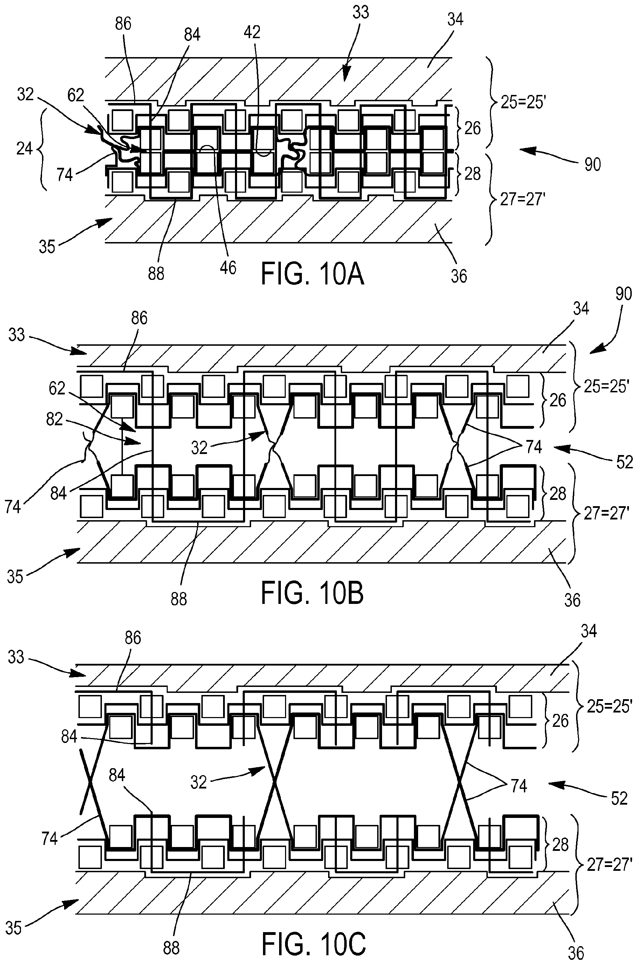

L'espace annulaire intérieur 52 comprend également des moyens sacrificiels de maintien temporaire 62 du premier tissu 26 et du deuxième tissu 28 l'un par rapport à l'autre représenté à l'état rompu sur la figure 1 et à l'état non rompu sur la figure 5 et que l'on va décrire plus en détails en référence aux figures suivantes. Les mêmes moyens sacrificiels de maintien temporaire 62 sont représentés à l'état non rompu sur les figures 10A et 10B.

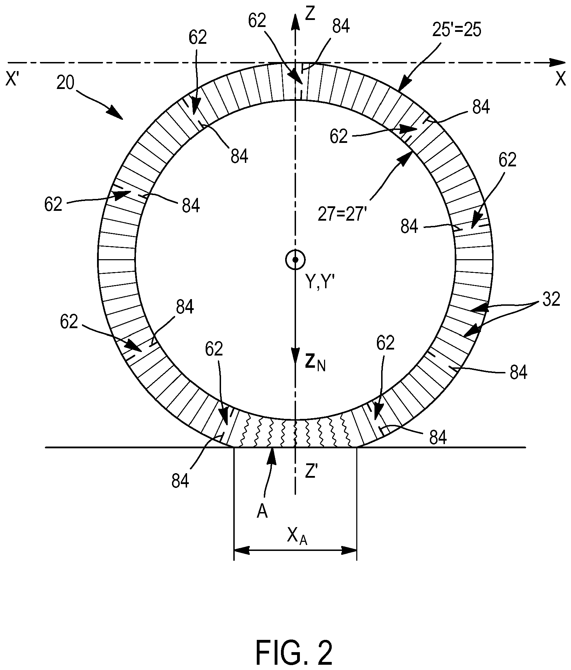

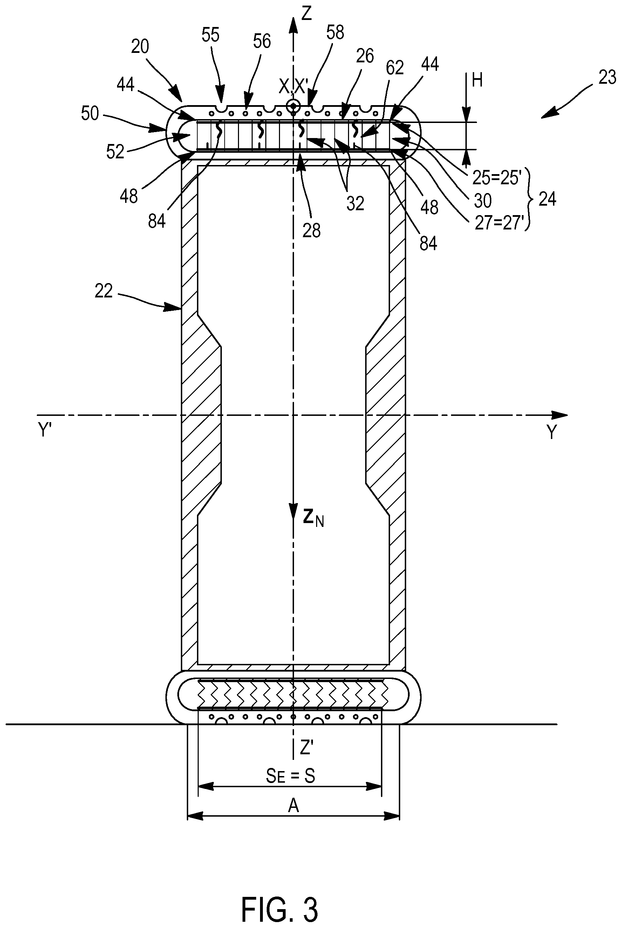

Sur les figures 2 et 3, le pneumatique 20 est représenté soumis à une charge radiale nominale Z_{N}. Le pneumatique 20 est en contact avec un sol plan par une surface de contact A, ayant une longueur circonférentielle X_{A}. Les éléments porteurs 32, reliés à la portion de la première structure tissée imprégnée 25 formant la première structure de révolution radialement extérieure 25' du pneumatique 20 en contact avec le sol par l'intermédiaire de la bande de roulement, sont soumis à flambage en compression, alors qu'au moins une partie des éléments porteurs 32, reliés à la portion de la première structure tissée imprégnée 25 formant la première structure de révolution radialement extérieure 25' du pneumatique 20 non en contact avec le sol, sont en tension.

On a représenté sur la figure 4, une face externe 53 du premier tissu 26 avant sa mise dans le pneumatique 20. On a volontairement omis de représenter la première couche 33 de composition polymérique 34 pour des raisons de clarté de l'exposé. On a représenté sur la figure 5 un ensemble 90 selon l'invention.

Le premier tissu 26 est un tissu comprenant des entrecroisements d'une première famille d'éléments filaires 64, appelés éléments filaires de chaine, et d'une deuxième famille d'éléments filaires 66, appelés éléments filaires de trame. Les éléments filaires de chaine 64 du premier tissu 26 sont sensiblement parallèles entre eux et s'étendent selon une direction dite de chaine. Les éléments filaires de trame 66 du premier tissu 26 sont sensiblement parallèles entre eux et s'étendent selon une direction dite de trame.

Le deuxième tissu 28 est un tissu comprenant des entrecroisements d'une première famille d'éléments filaires 68, appelés éléments filaires de chaine, et d'une deuxième famille d'éléments filaires 70, appelés éléments filaires de trame. Les éléments filaires de chaine 68 du deuxième tissu 28 sont sensiblement parallèles entre eux et s'étendent selon une direction dite de chaine. Les éléments filaires de trame 70 du deuxième tissu 28 sont sensiblement parallèles entre eux et s'étendent selon une direction dite de trame.

Au sein de chaque premier et deuxième tissu 26, 28, les directions de chaine et de trame forment l'une avec l'autre un angle allant de 70° à 90°. En l'espèce, l'angle est sensiblement égal à 90°.

Les éléments filaires 64, 66, 68, 70 sont tous sensiblement identiques. Chaque élément filaire 64, 66, 68, 70 est un élément filaire textile, ici réalisé en polyéthylène téréphtalate (PET). En l'espèce, chaque élément filaire 64, 66, 68, 70 est un élément filaire filé présentant une masse linéique égale à 170 tex et une ténacité égale à 66 cN/tex.

Les éléments porteurs 32 sont des éléments filaires porteurs. Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. En outre, chaque élément filaire porteur 32 est entrelacé avec le premier tissu 26 et le deuxième tissu 28. Chaque élément filaire porteur 32 est un élément filaire porteur textile, ici réalisé en polyéthylène téréphtalate (PET). En l'espèce, chaque élément porteur est un élément filaire filé présentant une masse linéique égale à 55 tex et une ténacité égale à 54 cN/tex.

Chaque élément filaire porteur 32 comprend une portion filaire porteuss 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portions filaires d'ancrage 76, 78 prolonge une portion porteuse 74 respectivement dans chaque premier tissu 26 et deuxième tissu 28. Chaque première et deuxième portion filaire d'ancrage 76, 78 est enroulée au moins en partie autour de plusieurs éléments filaires des premières familles d'éléments filaires 64, 68 de chaine respectivement de chaque premier tissu 26 et chaque deuxième tissu 28. Ainsi, chaque portion filaire d'ancrage 76, 78 relie deux portions filaires porteuses 74 entre elles.

Chaque moyen sacrificiel de maintien temporaire 62 comprend un élément filaire sacrificiel de maintien temporaire 82. Les éléments filaires sacrificiels de maintien temporaire 82 sont représentés à l'état non rompu sur les figures 5, 10A et 10B et à l'état rompu sur la figure 10C.

A l'état non rompu, et comme cela est visible sur les figure 10A et 10B, chaque élément filaire sacrificiel de maintien temporaire 82 s'étend alternativement du premier tissu 26 vers le deuxième tissu 28 et du deuxième tissu 28 vers le premier tissu 26 lorsqu'on se déplace le long de l'élément filaire sacrificiel de maintien temporaire 82. Chaque élément filaire sacrificiel de maintien temporaire 82 est entrelacé avec le premier tissu 26 et le deuxième tissu 28. Chaque élément filaire sacrificiel de maintien temporaire 82 est un élément filaire textile, ici identique aux éléments filaires porteurs 32.

A l'état non rompu, comme cela est visible sur les figures 4 et 5, chaque élément filaire sacrificiel de maintien temporaire 82 comprend une ou plusieurs portions filaires de liaison 84 du premier tissu 26 et du deuxième tissu 28 l'un par rapport à l'autre. Chaque élément filaire sacrificiel de maintien temporaire 82 comprend des première et deuxième portions filaires de serrage 86, 88 prolongeant la portion filaire de liaison 84 respectivement dans chaque première et deuxième structure tissée imprégnée 25, 27, ici respectivement dans chaque premier et deuxième tissu 26, 28.

Sur les figures 4 et 7, on voit les portions de serrage 86 des éléments filaire sacrificiel de maintien temporaire 82 ainsi que les portions filaires d'ancrage 76 des éléments filaires porteurs 32.

Sur la figure 4, le premier tissu 26 et le deuxième tissu 28 s'étendent tous les deux selon une direction générale principale G sensiblement parallèle aux bords longitudinaux des premier et deuxième tissus 26, 28. Les éléments filaires de chaine 64 du premier tissu radialement extérieur 26 s'étendent selon une direction formant, avec la direction générale principale du premier tissu 26, un angle A1 au moins égal à 10° et au plus égal à 45°. Les éléments filaires de trame 66 du premier tissu radialement extérieur 26 s'étendent selon une direction formant, avec la direction générale principale du premier tissu 26, un angle A2 au moins égal à 10° et au plus égal à 45°.

De façon analogue, les éléments filaires de chaine 68 du deuxième tissu radialement intérieur 28 s'étendent selon une direction formant, avec la direction générale principale du deuxième tissu radialement intérieur 28, un angle A3 au moins égal à 10° et au plus égal à 45°. Les éléments filaires de trame 70 du deuxième tissu radialement intérieur 28 s'étendent selon une direction formant, avec la direction générale principale du premier tissu 26, un angle A4 au moins égal à 10° et au plus égal à 45°. En l'espèce, A1=A2=A3=A4=45°.

On a représenté sur la figure 6 une portion filaire porteuse 74 d'un élément filaire porteur 32. La portion filaire porteuse 74 présente une section moyenne S_{P} circulaire, définie par une plus petite dimension caractéristique E et une plus grande dimension caractéristique L toutes deux égales, dans l'exemple présenté, au diamètre du cercle, et caractérisée par son rapport de forme K égal à L/E, donc égal à 1 dans le cas présent. En outre, la plus petite dimension caractéristique E de la section moyenne S_{P} de la portion filaire porteuse 74, c'est-à-dire, dans le cas présent, son diamètre, est au plus égale à 0.02 fois la hauteur radiale moyenne H de l'espace annulaire intérieur 52. La portion porteuse 74 a une longueur L_{P} au moins égale à la hauteur moyenne H de l'espace annulaire intérieur 52. Les portions filaires d'ancrage 76, 78 présentent la même section moyenne S_{P} circulaire et la même plus petite dimension caractéristique E de la section moyenne S_{P}.

Sur la figure 7, on a représenté partiellement le pneumatique 20 de façon à voir la face externe 53 du premier tissu 26 lorsque celui-ci est agencé au sein du pneumatique 20.

Les éléments filaires de chaine 64 du premier tissu 26 s'étendent selon une direction formant, avec la direction circonférentielle XX' du pneumatique 20, un angle B1 inférieur à l'angle A1. De même, les éléments filaires de trame 66 du premier tissu 26 s'étendent selon une direction formant, avec la direction circonférentielle XX' du pneumatique 20, un angle B2 inférieur à l'angle A2.

Les éléments filaires de chaine 68 du deuxième tissu radialement intérieur 28 s'étendent selon une direction formant, avec la direction circonférentielle XX' du pneumatique 20, un angle B3. De même, les éléments filaires de trame 70 du deuxième tissu radialement intérieur 28 s'étendent selon une direction formant, avec la direction circonférentielle XX' du pneumatique 20, un angle B4.

En l'espèce, chaque angle B1, B2 est respectivement inférieur à chaque angle A1, A2 et est au moins égal à 10° et inférieur à 45° et ici B1=B2=38°. Chaque angle B3, B4 est respectivement sensiblement égal à chaque angle A3, A4 et est au moins égal à 10° et inférieur ou égal à 45° et ici B3=B4=45°.

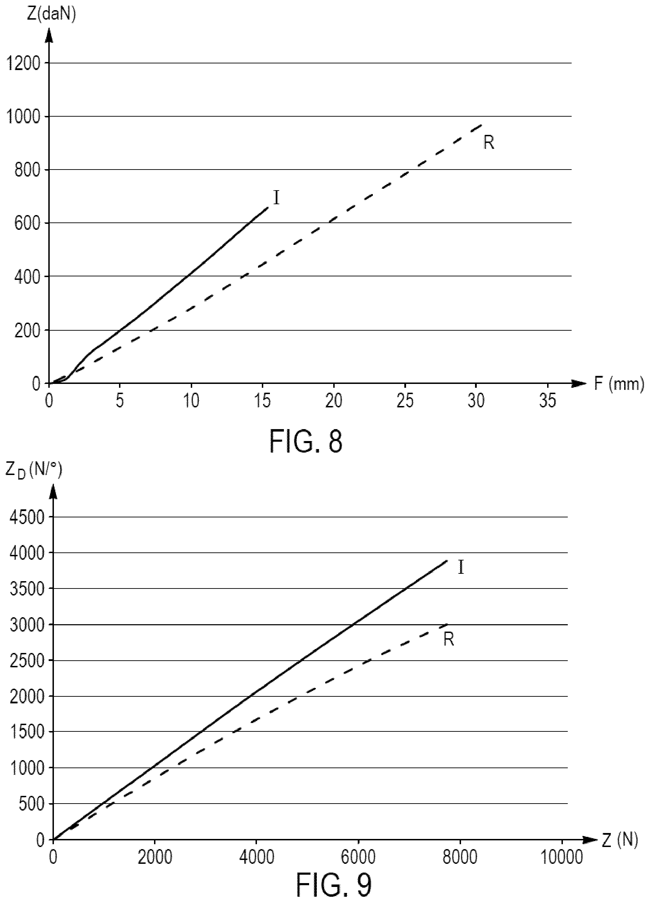

Le pneumatique 20 dont les caractéristiques de rigidités sont présentées sur les figures 8 et 9 comprend des première et deuxième structures de révolution radialement extérieure et radialement intérieure 25', 27' ayant des rayons moyens respectifs égaux à 333 mm et 298 mm, et des largeurs axiales toutes deux égales à 250 mm. L'espace annulaire intérieur 52 a une hauteur radiale moyenne H égale à 35 mm. Le pneumatique 20 est gonflé a une pression P comprise entre 1.5 bar et 2.5 bars et est soumis à une charge radiale Z_{N} égale à 600 daN.

La figure 8 présente deux courbes-types comparées de l'évolution de la charge appliquée Z, exprimée en daN, en fonction de la flèche F, exprimée en mm, pour un pneumatique selon l'invention I et un pneumatique de référence R de l'état de la technique. La figure 8 montre que, pour une charge radiale donnée Z, la flèche F d'un pneumatique selon l'invention I est plus petite que celle du pneumatique de référence R. Autrement dit, la rigidité radiale du pneumatique selon l'invention I est plus grande que la rigidité radiale du pneumatique de référence R.

La figure 9 présente deux courbes-types comparées de l'évolution de la rigidité de dérive Z_{D}, exprimée en N/°, en fonction de la charge appliquée, exprimée en N, pour un pneumatique selon l'invention I et un pneumatique de référence R de l'état de la technique. La figure 9 montre que, pour une charge radiale donnée Z, la rigidité de dérive Z_{D} d'un pneumatique selon l'invention I est plus grande que celle du pneumatique de référence R.

On va maintenant décrire un procédé de fabrication selon l'invention en référence aux figures 10A, 10B et 10C.

On a représenté sur les figures 10A et 10B l'ensemble 90 selon l'invention. L'ensemble 90 comprend l'assemblage 24 ainsi que les moyens sacrificiels de maintien temporaire 62 représentés à l'état non rompu. L'assemblage 24 est un produit commercial, par exemple disponible auprès de la société GIRMES INTERNATIONAL GBMH. Dans une étape de préparation de l'ensemble 90, on relie le premier tissu 26 et le deuxième tissu 28 l'un à l'autre grâce aux moyens 62 et on agence les moyens 62 de façon à maintenir la face interne 42 du premier tissu 26 au contact de la face interne 46 du deuxième tissu 28. Puis, dans une étape d'imprégnation des premier et deuxième tissus 26, 28, on imprègne chaque premier et deuxième tissu 26, 28 respectivement avec les première et deuxième compositions polymériques 34, 36 de façon à former les première et deuxième bandes 33, 35 et à constituer les première et deuxième structures tissées imprégnées 25, 27.

On obtient alors l'ensemble 90 selon l'invention représenté sur la figure 10A. Sur la figure 10A, chaque élément filaire sacrificiel de maintien temporaire 82 est tendu de façon à maintenir l'un par rapport à l'autre les premier et deuxième tissu 26, 28 sans pour autant faire froncer l'assemblage 24 dans la direction générale principale des premier et deuxième tissus 26, 28. Chaque portion filaire de liaison 84 présente alors une longueur au repos L0. Chaque portion filaire porteuse 74 est dans un état replié ou fléchi. Chaque élément filaire sacrificiel de maintien temporaire 82 est agencé de façon à rompre avant les éléments porteurs 32 lorsqu'on écarte les première et deuxième structures tissées imprégnées 33, 35 l'une de l'autre.

Les portions filaires de liaison 84 sont agencés selon une densité surfacique moyenne D' par unité de surface de première structure tissée imprégnée 25, exprimée en 1/m2. Chaque portion filaire de liaison 84 présente une force à rupture Fr', exprimée en N. La force à rupture surfacique Fs' des portions filaires de liaison 84, et par extension des éléments filaires sacrificiels de maintien temporaire 82, est alors définie par Fs'=Fr'.D'. La force à rupture Fs surfacique des portions filaires porteuses 74, et par extension des éléments porteurs 32, est définie par Fs=Fr.D dans laquelle Fr est la force à rupture, en N, de chaque portion filaire porteuse 74 et D la densité surfacique moyenne des portions filaires porteuses 74 par unité de surface de première structure tissée imprégnée 25, exprimée en 1/m2. Les éléments filaires sacrificiels de maintien temporaire 82 et les éléments filaires porteurs 32 sont agencés de sorte que Fs>Fs'.

Dans l'exemple du premier mode de réalisation, les éléments filaires porteurs 32 et les éléments filaires sacrificiels de maintien temporaire 82 sont individuellement identiques. Chaque élément porteur 32 est réalisé en polyéthylène téréphtalate (PET) et présente une section moyenne S_{P} égale à 7^{∗}10⁻⁸ m² et une contrainte à rupture Fᵣ/S_{P} égale à 470 MPa. La densité surfacique moyenne D des portions filaires porteuses 74 par unité de surface de la première structure tissée imprégnée 25 et par unité de surface de la deuxième structure tissée imprégnée 27 est égale à 85000 fils/m². Les forces à rupture Fr et Fr' sont égales à 33 N. La densité surfacique moyenne D' des portions filaires de liaison 84 par unité de surface de la première structure tissée imprégnée 25 et par unité de surface de la deuxième structure tissée imprégnée 27 est égale à 200 fils/m².

On dispose d'un cylindre de confection dont le diamètre est égal à celui du moyen de montage sur lequel est destiné à être monté le pneumatique 20. Le cylindre de confection est sensiblement de révolution autour d'un axe de révolution coaxial à l'axe de révolution YY' du pneumatique 20. On enroule autour de ce cylindre de confection l'ensemble 90 de la figure 10A. L'ensemble 90 selon l'invention forme alors un enroulement cylindrique axialement continu, autour de l'axe de révolution YY' du pneumatique 20 dont la largeur axiale est supérieure ou égale à 50%, de préférence à 75% de la largeur axiale de la bande de roulement 58. Dans ce cas, l'ensemble 90 est déposé selon un seul tour d'enroulement cylindrique. On parle alors de pose en pleine largeur, puisque la largeur axiale visée de l'ensemble 90 est obtenue en un seul tour d'enroulement cylindrique. L'avantage d'une pose en pleine largeur est la productivité de fabrication. En revanche, une pose en pleine largeur implique nécessairement l'existence d'au moins une zone de recouvrement, ou soudure, selon la direction circonférentielle, entre les extrémités circonférentielles de l'ensemble 90, en particulier en fin d'enroulement. L'ensemble 90 est posé de sorte que les éléments filaires de chaîne 64, 68 et de trame 66, 70, sensiblement perpendiculaires entre eux, forment, avec la direction circonférentielle XX' du pneumatique 20, des angles A1, A2, A3, A4 sensiblement égaux à 45°.

Puis, on forme l'espace annulaire intérieur 52. Pour ce faire, dans le mode de réalisation décrit, on joint chaque flanc 50 à chaque extrémité axiale 44, 48 de la première structure tissée imprégnée 25 et de la deuxième structure tissée imprégnée 27 de façon à constituer l'espace annulaire intérieur 52.

Puis, on écarte radialement par rapport à l'axe de révolution du pneumatique 20 au moins une des première et deuxième structures tissées imprégnées 25, 27, en l'espèce uniquement la première structure tissée imprégnée 25. Pour ce faire, dans le mode de réalisation décrit, on déploie l'espace annulaire intérieur 52 par pressurisation par un gaz de gonflage de l'espace annulaire intérieur 52, par exemple de l'air. On obtient alors l'ensemble 90 selon l'invention représenté sur la figure 10B. Chaque portion filaire de liaison 84 présente alors une longueur L1>L0. Chaque portion filaire porteuse 74 est toujours dans un état replié ou fléchi.

Ensuite, en continuant d'écarter radialement par rapport à l'axe de révolution YY' du pneumatique 20 au moins une des première et deuxième structures tissées imprégnées 25, 27, en l'espèce uniquement la première structure tissée imprégnée 25, on rompt les moyens sacrificiels 84 de maintien temporaire. Pour ce faire, dans le mode de réalisation décrit, on déploie l'espace annulaire intérieur 52 de façon à rompre les moyens sacrificiels 62 de maintien temporaire toujours par pressurisation par le gaz de gonflage. Lorsque la pression est suffisamment élevée, on rompt les éléments filaires sacrificiels de maintien temporaire 82 sans rompre les éléments porteurs 32 et on atteint alors la longueur de rupture LR de chaque portion filaire de liaison 84, LR étant telle que LR>L1>L0 et LR=L0(1+Ar') où Ar' est l'allongement à rupture exprimé en % de la portion filaire de liaison 84. On obtient alors l'ensemble représenté sur la figure 10C dans lequel les moyens sacrificiels 62 sont dans un état rompu et dans lequel chaque portion filaire porteuse 74 est dans un état sensiblement tendu.

Lors de l'écartement radial d'au moins une des première et deuxième structures tissées imprégnées 25, 27 par rapport à l'axe de révolution YY' du pneumatique 20, généralement appelé conformation, le diamètre de la première structure tissée imprégnée 25 formant la première structure de révolution radialement extérieure 25' du pneumatique 20, et donc du premier tissu 26, augmente alors que le diamètre de la deuxième structure tissée imprégnée 27 formant la deuxième structure de révolution radialement intérieure 27' du pneumatique 20, et donc du deuxième tissu 28, reste sensiblement constant. La distance radiale par rapport à l'axe de révolution YY' du pneumatique 20 du premier tissu 26 augmente de façon significative au cours de la conformation ainsi que sa longueur circonférentielle et les angles formés par les éléments filaires de chaîne 64 et de trame 66, avec la direction circonférentielle XX' du pneumatique 20, initialement égaux à 45°, diminuent et deviennent au moins égal à 10° et au plus égal à 45°, après conformation, ici égal à B1=B2=38°. La distance radiale par rapport à l'axe de révolution YY' du pneumatique 20 du deuxième tissu 28 reste sensiblement constante au cours de la conformation, sa longueur circonférentielle ne varie sensiblement pas et les angles formés par les éléments filaires de chaîne 68 et de trame 70 avec la direction circonférentielle XX' du pneumatique 20, initialement égal à 45°, restent sensiblement égal à 45°, après conformation, ici B3=B4=45°.

Puis, on enroule la structure de révolution de sommet 55 radialement à l'extérieur de la première structure tissée imprégnée 25 formant la première structure de révolution radialement extérieure 25'.

Ensuite, on dépressurise l'espace annulaire intérieur 52 jusqu'à la pression atmosphérique ambiante. On obtient alors le pneumatique 20 à l'état cru. Enfin, on réticule le pneumatique 20, par exemple par vulcanisation, afin d'obtenir le pneumatique 20 à l'état cuit.

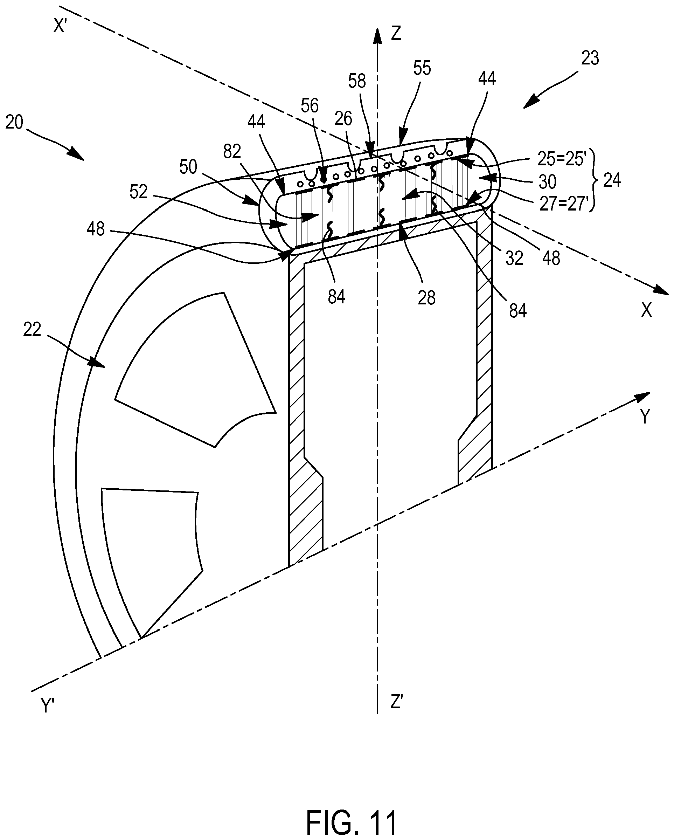

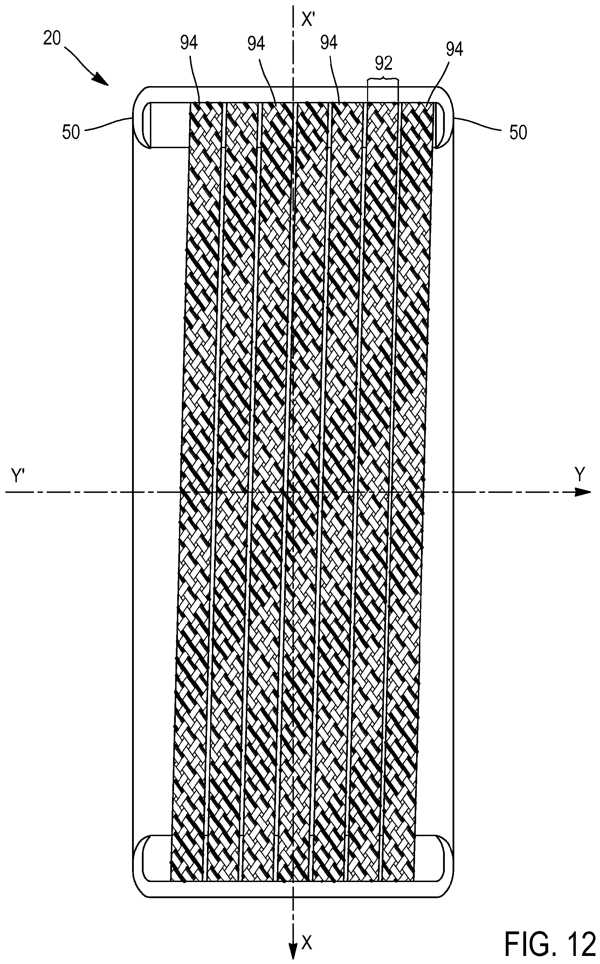

On a représenté sur les figures 11 et 12 un pneumatique 20 selon un deuxième mode de réalisation. Les éléments analogues à ceux représentées sur les figures précédentes sont désignés par des références identiques.

A la différence du pneumatique selon le premier mode de réalisation, dans le pneumatique 20 selon le deuxième mode de réalisation, l'assemblage 24 s'étend axialement de façon discontinue entre les deux flancs 50 du pneumatique 20. L'assemblage 24 s'étend circonférentiellement sur plusieurs tours autour de l'axe de révolution YY' du pneumatique 20 de façon à former un enroulement d'une bandelette d'assemblage 92 axialement discontinue.

Ainsi, comme cela est illustré sur la figure 12, l'ensemble 90 est enroulé autour de l'axe du pneumatique 20 de façon à former un enroulement hélicoïdal d'une bandelette d'assemblage 92, les portions axiales 94 de la bandelette 92 étant axialement juxtaposées. Par bandelette, on entend un ensemble 90 ayant une largeur axiale limitée, au plus égale à 30% de la largeur axiale de la bande de roulement 58, et de grande longueur au moins égale à deux fois la circonférence de la bande de roulement 58, de façon à ce que la bandelette à poser puisse être stockée sous forme de rouleau. Une telle bandelette est ainsi déroulée selon une hélice, ayant pour axe de révolution l'axe de révolution du pneumatique 20. Le nombre de tours d'enroulement hélicoïdal de la bandelette est déterminé par la largeur axiale totale de l'enroulement hélicoïdal visée et par la densité d'éléments porteurs 32. La pose de la bandelette peut être jointive, c'est-dire que les portions de bandelette sont en contact deux à deux par leurs bords axiaux, ou non jointives, c'est-à-dire que les bords axiaux des portions axiales 94 de bandelette sont espacées d'un espace sensiblement non nul. L'avantage d'une pose en bandelette est l'absence de zones de recouvrement, ou soudures, selon la direction circonférentielle, entre des portions axiales de bandelette, en fin d'enroulement.

Dans une conception de type bandelette, la surface de liaison S_{E} de la face externe 43 de la première structure tissée imprégnée 25 formant la première structure de révolution radialement extérieure 25' du pneumatique 20 tissu radialement extérieur avec la face radialement intérieure 59 de la structure de révolution de sommet 55 est la somme des surfaces de liaison des portions axiales 94 de bandelette 92 juxtaposées.

La bandelette 92 est enroulée hélicoïdalement autour de l'axe de révolution du pneumatique 20 de sorte que, avant conformation, les éléments filaires de chaine 64 et de trame 66 du premier tissu 26 s'étendent selon une direction formant avec la direction circonférentielle XX', respectivement un angle A1, A2 au moins égal à 10° et au plus égal à 45° et de sorte que les éléments filaires de chaine 68 et de trame 70 du deuxième tissu radialement intérieur 28 s'étendent selon une direction formant, avec la direction générale principale du deuxième tissu radialement intérieur 28, respectivement un angle A3, A4 au moins égal à 10° et au plus égal à 45°. En l'espèce, A1=A2=A3=A4=45°.

Comme dans le premier mode de réalisation, après conformation, les angles formés par les éléments filaires de chaîne 64 et de trame 66, avec la direction circonférentielle XX', initialement égal à 45°, diminuent et deviennent au moins égaux à 10° et au plus égaux à 45°, après conformation, ici égaux à B1=B2=38°. Les angles formés par les éléments filaires de chaîne 68 et de trame 70 avec la direction circonférentielle XX' du pneumatique 20, initialement égaux à 45°, restent sensiblement égaux à 45°.

L'invention ne se limite pas aux modes de réalisation décrits ci-dessus.

On pourra envisager un mode de réalisation dans lequel le moyen sacrificiel de maintien temporaire est différent d'un élément filaire. Par exemple, on pourra envisager que le moyen sacrificiel de maintien temporaire est une composition adhésive reliant les premier et deuxième tissus entre eux par des points de cette composition adhésive.

En variante, chaque élément filaire sacrificiel de maintien temporaire pourraient bien évidemment être différent des éléments filaires porteurs. Ainsi, par exemple, on pourrait avoir des éléments filaires porteurs réalisés en PET et des éléments filaires sacrificiels réalisés en coton.

On pourra également imaginer que l'étape dans laquelle on relie le premier tissu et le deuxième tissu l'un à l'autre grâce aux moyens sacrificiels de maintien temporaire et on agence les moyens sacrificiels de maintien temporaire de façon à maintenir la face interne du premier tissu au contact de la face interne du deuxième tissu soit réalisée après que l'on imprègne chaque premier et deuxième tissu respectivement par les première deuxième compositions.

Dans l'exemple décrit ci-dessus, la partie de liaison de chaque élément filaire sacrificiel de maintien temporaire rompt lors de l'écartement des première et deuxième structures 25, 27 l'une de l'autre. On pourrait également imaginer une rupture de la partie de serrage.

## Revendications

1. Ensemble (90) pour pneumatique, comprenant :
- un assemblage (24) comprenant :
- une première structure tissée ou tricotée imprégnée (25) comprenant un premier tissu ou tricot (26) et une première couche d'une première composition polymérique (34), le premier tissu ou tricot (26) étant imprégné au moins en partie de la première composition polymérique (34) ;
- une deuxième structure tissée ou tricotée imprégnée (27) comprenant un deuxième tissu ou tricot (28) et une deuxième couche d'une deuxième composition polymérique (36), le deuxième tissu ou tricot (28) étant imprégné au moins en partie de la deuxième composition polymérique (36) ;
- une structure porteuse (30) comprenant des éléments porteurs (32) reliant les premier et deuxième tissu(s) ou tricot(s) (26, 28) entre eux, ledit ensemble pour pneumatique étant **caractérisé en ce qu'**il comprend
au moins un moyen sacrificiel (62) de maintien temporaire des première et deuxième structures tissées ou tricotées imprégnées (25, 27) l'une par rapport à l'autre, reliant les premier et deuxième tissu(s) ou tricot(s) (26, 28) entre eux, le moyen sacrificiel (62) étant agencé de façon à rompre avant les éléments porteurs (32) lorsqu'on écarte les première et deuxième structures tissées ou tricotées imprégnées (25, 27) l'une de l'autre.

2. Ensemble (90) selon la revendication 1, dans lequel les première et deuxième structures tissées ou tricotées imprégnées (25, 27) comprenant respectivement des première et deuxième faces externes (43, 47) sensiblement parallèles l'une à l'autre, le moyen sacrificiel (62) est agencé de façon à rompre avant les éléments porteurs (32) lorsqu'on écarte les première et deuxième structures tissées ou tricotées imprégnées (25, 27) l'une de l'autre selon une direction sensiblement perpendiculaire aux première et deuxième faces externes (43, 47).

3. Ensemble (90) selon l'une quelconque des revendications précédentes, dans lequel chaque moyen sacrificiel de maintien temporaire (62) comprend un élément filaire sacrificiel de maintien temporaire (82).

4. Ensemble (90) selon la revendication 3, dans lequel l'élément filaire sacrificiel de maintien temporaire (82) s'étend alternativement du premier tissu ou tricot (26) vers le deuxième tissu ou tricot (28) et du deuxième tissu ou tricot (28) vers le premier tissu ou tricot (26) lorsqu'on se déplace le long de l'élément filaire sacrificiel de maintien temporaire (82).

5. Ensemble (90) selon l'une quelconque des revendications précédentes, dans lequel chaque élément porteur (32) est un élément filaire porteur (32).

6. Ensemble (90) selon la revendication 85, dans lequel chaque élément filaire porteur (32) s'étend alternativement du premier tissu ou tricot (26) vers le deuxième tissu ou tricot (28) et du deuxième tissu ou tricot (28) vers le premier tissu ou tricot (26) lorsqu'on se déplace le long de l'élément filaire porteur (32).

7. Ensemble (90) selon a revendications 5 ou 6, dans lequel l'élément filaire porteur (32) comprend :
- au moins une portion filaire porteuse (74) s'étendant entre les premier et deuxième tissu(s) ou tricot(s) (26, 28), et
- au moins des première et deuxième portions filaires d'ancrage (76, 78) de l'élément filaire porteur (32) respectivement dans les premier et deuxième tissu(s) ou tricot(s) (26, 28), prolongeant la portion filaire porteuse (74) respectivement dans les premier et deuxième tissu(s) ou tricot(s) (26, 28).

8. Ensemble (90) selon la revendications 7, dans lequel, chaque premier et deuxième tissu ou tricot (26, 28) étant un tissu comprenant des entrecroisements d'une première famille d'éléments filaires (64, 68), sensiblement parallèles entre eux, et d'une deuxième famille d'éléments filaires (66, 70), sensiblement parallèles entre eux, chaque première et deuxième portion filaire d'ancrage (76, 78) est enroulée au moins en partie autour d'au moins un élément filaire (64, 68) d'au moins une des première et deuxième familles d'éléments filaires (68, 70) respectivement de chaque premier et deuxième tissu (26, 28).

9. Pneumatique (20), **caractérisé en ce qu'**il comprend :
- une première structure de révolution (25') formée par une première structure tissée ou tricotée imprégnée (25) comprenant un premier tissu ou tricot (26) et une première couche d'une première composition polymérique (34), le premier tissu ou tricot (26) étant imprégné au moins en partie de la première composition polymérique (34) ;
- une deuxième structure de révolution (27') formée par une deuxième structure tissée ou tricotée imprégnée (27) comprenant un deuxième tissu ou tricot (28) et une deuxième couche d'une deuxième composition polymérique (36), le deuxième tissu ou tricot (28) étant imprégné au moins en partie de la deuxième composition polymérique (36),
- une structure porteuse (30) comprenant des éléments porteurs (32) reliant les premier et deuxième tissu(s) ou tricot(s) (26, 28) entre eux ;
- - un moyen sacrificiel (62) de maintien temporaire des première et deuxième structures tissées ou tricotées imprégnées l'une par rapport à l'autre, la première structure tissée ou tricotée imprégnée (25), la deuxième structure tissée ou tricotée imprégnée (27), la structure porteuse (30) et le moyen sacrificiel (62) formant un assemblage (24);
- une structure de révolution de sommet (55) agencée radialement à l'extérieur de la première structure de révolution (25') ;
- un espace annulaire intérieur (52) délimité par une face interne (42) de la première structure de révolution (25') et une face interne (46) de la deuxième structure de révolution (27') ;
- deux flancs (50) reliant entre elles chaque extrémité axiale (44) de la première structure de révolution radialement extérieure (25') et chaque extrémité axiale (48) de la deuxième structure de révolution (27'), les deux flancs (50) délimitant l'espace annulaire intérieur (52) ; l'espace annulaire intérieur (52) formant une cavité fermée pouvant être pressurisée par un gaz de gonflage. et **en ce que** le moyen sacrificiel de maintien temporaire (62) est rompu.

10. Ensemble monté (23), **caractérisé en ce qu'**il comprend un pneumatique (20) selon la revendication 9 monté sur un moyen de montage (22) de l'ensemble monté (23) sur un véhicule.

11. Procédé de fabrication d'un pneumatique (20) selon la revendication 9, **caractérisé en ce que** :
- on enroule autour d'un cylindre de confection sensiblement de révolution autour d'un axe de révolution un ensemble (90) -selon l'une quelconque des revendications 1 à 8; et
- on écarte radialement par rapport à l'axe de révolution au moins une des première et deuxième structures tissées ou tricotées (25, 27) imprégnées de façon à rompre le moyen sacrificiel (62) de maintien temporaire.

12. Procédé selon la revendication précédente, dans lequel
- on forme l'espace annulaire intérieur (52) ;
- on déploie l'espace annulaire intérieur (52) de façon à rompre le moyen sacrificiel (62) de maintien temporaire.

13. Procédé selon la revendication précédente, dans lequel, pour former l'espace annulaire intérieur (52), on joint chaque flanc (50) à chaque extrémité axiale (44, 48) des première et deuxième structures de révolution (25', 27') de façon à constituer l'espace annulaire intérieur (52).

14. Procédé selon la revendication 12 ou 13, dans lequel on déploie l'espace annulaire intérieur (52) par pressurisation par un gaz de gonflage de l'espace annulaire intérieur (52).

15. Procédé selon l'une quelconque des revendications 12 à 14, dans lequel après le déploiement de l'espace annulaire intérieur (52), on enroule la structure de révolution de sommet (55) radialement à l'extérieur de la première structure de révolution (25').

## Patentansprüche

1. Anordnung (90) für einen Reifen, welche umfasst:
- einen Aufbau (24), welcher umfasst:
- eine erste imprägnierte gewebte oder gestrickte Struktur (25), die ein erstes Gewebe oder Gestrick (26) und eine erste Schicht einer ersten Polymerzusammensetzung (34) umfasst, wobei das erste Gewebe oder Gestrick (26) wenigstens teilweise mit der ersten Polymerzusammensetzung (34) imprägniert ist;
- eine zweite imprägnierte gewebte oder gestrickte Struktur (27), die ein zweites Gewebe oder Gestrick (28) und eine zweite Schicht einer zweiten Polymerzusammensetzung (36) umfasst, wobei das zweite Gewebe oder Gestrick (28) wenigstens teilweise mit der zweiten Polymerzusammensetzung (36) imprägniert ist;
- eine Trägerstruktur (30), die Trägerelemente (32) umfasst, welche das erste und das zweite Gewebe oder Gestrick (26, 28) miteinander verbinden,
wobei die Anordnung für einen Reifen **dadurch gekennzeichnet ist, dass** sie umfasst:
wenigstens ein Opfermittel (62) zum zeitweiligen Halten der ersten und zweiten imprägnierten gewebten oder gestrickten Struktur (25, 27) relativ zueinander, welches das erste und das zweite Gewebe oder Gestrick (26, 28) miteinander verbindet, wobei das Opfermittel (62) so ausgebildet ist, dass es vor den Trägerelementen (32) bricht, wenn die erste und zweite imprägnierte gewebte oder gestrickte Struktur (25, 27) voneinander entfernt werden.

2. Anordnung (90) nach Anspruch 1, wobei die erste und zweite imprägnierte gewebte oder gestrickte Struktur (25, 27) eine erste bzw. zweite Außenseite (43, 47) umfassen, die im Wesentlichen parallel zueinander sind, wobei das Opfermittel (62) so ausgebildet ist, dass es vor den Trägerelementen (32) bricht, wenn die erste und zweite imprägnierte gewebte oder gestrickte Struktur (25, 27) in einer Richtung voneinander entfernt werden, die im Wesentlichen senkrecht zur ersten und zweiten Außenseite (43, 47) ist.

3. Anordnung (90) nach einem der vorhergehenden Ansprüche, wobei jedes Opfermittel zum zeitweiligen Halten (62) ein fadenförmiges Opferelement zum zeitweiligen Halten (82) umfasst.

4. Anordnung (90) nach Anspruch 3, wobei sich das fadenförmige Opferelement zum zeitweiligen Halten (82) abwechselnd vom ersten Gewebe oder Gestrick (26) zum zweiten Gewebe oder Gestrick (28) und vom zweiten Gewebe oder Gestrick (28) zum ersten Gewebe oder Gestrick (26) erstreckt, wenn man sich entlang des fadenförmigen Opferelements zum zeitweiligen Halten (82) bewegt.

5. Anordnung (90) nach einem der vorhergehenden Ansprüche, wobei jedes Trägerelement (32) ein fadenförmiges Trägerelement (32) ist.

6. Anordnung (90) nach Anspruch 5, wobei sich jedes fadenförmige Trägerelement (32) abwechselnd vom ersten Gewebe oder Gestrick (26) zum zweiten Gewebe oder Gestrick (28) und vom zweiten Gewebe oder Gestrick (28) zum ersten Gewebe oder Gestrick (26) erstreckt, wenn man sich entlang des fadenförmigen Trägerelements (32) bewegt.

7. Anordnung (90) nach Anspruch 5 oder 6, wobei das fadenförmige Trägerelement (32) umfasst:
- wenigstens einen fadenförmigen Trägerabschnitt (74), der sich zwischen dem ersten und dem zweiten Gewebe oder Gestrick (26, 28) erstreckt, und
- wenigstens einen ersten und einen zweiten fadenförmigen Abschnitt zur Verankerung (76, 78) des fadenförmigen Trägerelements (32) im ersten bzw. zweiten Gewebe oder Gestrick (26, 28), welche den fadenförmigen Trägerabschnitt (74) im ersten bzw. zweiten Gewebe oder Gestrick (26, 28) verlängern.

8. Anordnung (90) nach Anspruch 7, wobei, wenn jedes erste und zweite Gewebe oder Gestrick (26, 28) ein Gewebe ist, das Verflechtungen einer ersten Familie von fadenförmigen Elementen (64, 68), die im Wesentlichen parallel zueinander sind, und einer zweiten Familie von fadenförmigen Elementen (66, 70), die im Wesentlichen parallel zueinander sind, umfasst, jeder erste und zweite fadenförmige Verankerungsabschnitt (76, 78) wenigstens teilweise um wenigstens ein fadenförmiges Element (64, 68) wenigstens einer der ersten und zweiten Familie von fadenförmigen Elementen (68, 70) jedes ersten bzw. zweiten Gewebes (26, 28) gewickelt ist.

9. Reifen (20), **dadurch gekennzeichnet, dass** er umfasst:
- eine erste rotationssymmetrische Struktur (25'), die von einer ersten imprägnierten gewebten oder gestrickten Struktur (25) gebildet wird, die ein erstes Gewebe oder Gestrick (26) und eine erste Schicht einer ersten Polymerzusammensetzung (34) umfasst, wobei das erste Gewebe oder Gestrick (26) wenigstens teilweise mit der ersten Polymerzusammensetzung (34) imprägniert ist;
- eine zweite rotationssymmetrische Struktur (27'), die von einer zweiten imprägnierten gewebten oder gestrickten Struktur (27) gebildet wird, die ein zweites Gewebe oder Gestrick (28) und eine zweite Schicht einer zweiten Polymerzusammensetzung (36) umfasst, wobei das zweite Gewebe oder Gestrick (28) wenigstens teilweise mit der zweiten Polymerzusammensetzung (36) imprägniert ist;
- eine Trägerstruktur (30), die Trägerelemente (32) umfasst, welche das erste und das zweite Gewebe oder Gestrick (26, 28) miteinander verbinden;
- ein Opfermittel (62) zum zeitweiligen Halten der ersten und zweiten imprägnierten gewebten oder gestrickten Struktur relativ zueinander, wobei die erste imprägnierte gewebte oder gestrickte Struktur (25), die zweite gewebte oder gestrickte Struktur (27), die Trägerstruktur (30) und das Opfermittel (62) einen Aufbau (24) bilden;
- eine rotationssymmetrische Scheitelstruktur (55), die radial außerhalb der ersten rotationssymmetrischen Struktur (25') angeordnet ist;
- einen inneren ringförmigen Raum (52), der von einer Innenseite (42) der ersten rotationssymmetrischen Struktur (25') und einer Innenseite (46) der zweiten rotationssymmetrischen Struktur (27') begrenzt wird;
- zwei Seitenwände (50), die jedes axiale Ende (44) der radial äußeren ersten rotationssymmetrischen Struktur (25') und jedes axiale Ende (48) der zweiten rotationssymmetrischen Struktur (27') miteinander verbinden, wobei die zwei Seitenwände (50) den inneren ringförmigen Raum (52) begrenzen; wobei der innere ringförmige Raum (52) einen geschlossenen Hohlraum bildet, der durch ein Aufpumpgas mit Druck beaufschlagt werden kann,
und dadurch, dass das Opfermittel zum zeitweiligen Halten (62) gebrochen ist.

10. Montierte Anordnung (23), **dadurch gekennzeichnet, dass** sie einen Reifen (20) nach Anspruch 9 umfasst, der auf einem Montagemittel (22) der montierten Anordnung (23) an einem Fahrzeug montiert ist.

11. Verfahren zur Herstellung eines Reifens (20) nach Anspruch 9, **dadurch gekennzeichnet, dass**:
- um einen Fertigungszylinder, der im Wesentlichen rotationssymmetrisch um eine Rotationsachse ist, eine Anordnung (90) nach einem der Ansprüche 1 bis 8 gewickelt wird; und
- die erste und/oder die zweite imprägnierte gewebte oder gestrickte Struktur (25, 27) radial von der Rotationsachse entfernt werden, so dass das Opfermittel (62) zum zeitweiligen Halten gebrochen wird.

12. Verfahren nach dem vorhergehenden Anspruch, wobei:
- der innere ringförmige Raum (52) gebildet wird;
- der innere ringförmige Raum (52) ausgebreitet wird, so dass das Opfermittel (62) zum zeitweiligen Halten gebrochen wird.

13. Verfahren nach dem vorhergehenden Anspruch, wobei, um den inneren ringförmigen Raum (52) zu bilden, jede Seitenwand (50) mit jedem axialen Ende (44, 48) der ersten und der zweiten rotationssymmetrischen Struktur (25', 27') verbunden wird, so dass der innere ringförmige Raum (52) gebildet wird.

14. Verfahren nach Anspruch 12 oder 13, wobei der innere ringförmige Raum (52) durch Druckbeaufschlagung des inneren ringförmigen Raumes (52) mit einem Aufpumpgas ausgebreitet wird.

15. Verfahren nach einem der Ansprüche 12 bis 14, wobei nach der Ausbreitung des inneren ringförmigen Raumes (52) die rotationssymmetrische Scheitelstruktur (55) radial auf die Außenseite der ersten rotationssymmetrischen Struktur (25') gewickelt wird.

## Claims

1. Tyre assembly (90) comprising:
- an assemblage (24) comprising:
- a first impregnated woven or knitted structure (25) comprising a first woven or knitted fabric (26) and a first layer of a first polymeric composition (34), the first woven or knitted fabric (26) being impregnated, at least in part, with the first polymeric composition (34);
- a second impregnated woven or knitted structure (27) comprising a second woven or knitted fabric (28) and a second layer of a second polymeric composition (36), the second woven or knitted fabric (28) being impregnated, at least in part, with the second polymeric composition (36);
- a bearing structure (30) comprising bearing elements (32) connecting the first and second woven or knitted fabric(s) (26, 28) together, said tyre assembly being **characterized in that** it comprises:
- at least one sacrificial means (62) for temporarily holding the first and second impregnated woven or knitted structures (25, 27) with respect to one another, connecting the first and second woven or knitted fabric(s) (26, 28) together, the sacrificial means (62) being arranged so as to break before the bearing elements (32) when the first and second impregnated woven or knitted structures (25, 27) are separated from one another.

2. Assembly (90) according to Claim 1, in which, as the first and second impregnated woven or knitted structures (25, 27) respectively comprise first and second external faces (43, 47) which are substantially parallel to one another, the sacrificial means (62) is arranged so as to break before the bearing elements (32) when the first and second impregnated woven or knitted structures (25, 27) are separated from one another along a direction substantially perpendicular to the first and second external faces (43, 47).

3. Assembly (90) according to either one of the preceding claims, in which each sacrificial temporary holding means (62) comprises a threadlike sacrificial temporary holding element (82).

4. Assembly (90) according to Claim 3, in which the threadlike sacrificial temporary holding element (82) extends alternately from the first woven or knitted fabric (26) towards the second woven or knitted fabric (28) and from the second woven or knitted fabric (28) towards the first woven or knitted fabric (26), on moving along the threadlike sacrificial temporary holding element (82).

5. Assembly (90) according to any one of the preceding claims, in which each bearing element (32) is a threadlike bearing element (32).

6. Assembly (90) according to Claim 5, in which each threadlike bearing element (32) extends alternately from the first woven or knitted fabric (26) towards the second woven or knitted fabric (28) and from the second woven or knitted fabric (28) towards the first woven or knitted fabric (26), on moving along the threadlike bearing element (32).

7. Assembly (90) according to Claim 5 or 6, in which the threadlike bearing element (32) comprises:
- at least one threadlike bearing portion (74) extending between the first and second woven or knitted fabric(s) (26, 28), and
- at least first and second threadlike portions (76, 78) for anchoring the threadlike bearing element (32) respectively in the first and second woven or knitted fabric(s) (26, 28), prolonging the threadlike bearing portion (74) respectively into the first and second woven or knitted fabric(s) (26, 28).

8. Assembly (90) according to Claim 7, in which, each first and second woven or knitted fabric (26, 28) being a woven fabric comprising intertwinings of a first family of threadlike elements (64, 68), substantially parallel to one another, and of a second family of threadlike elements (66, 70), substantially parallel to one another, each first and second threadlike anchoring portion (76, 78) is wound, at least in part, around at least one threadlike element (64, 68) of at least one of the first and second families of threadlike elements (68, 70) respectively of each first and second woven fabric (26, 28).

9. Tyre (20), **characterized in that** it comprises:
- an assemblage (24) comprising:
- a first structure of revolution (25') formed by a first impregnated woven or knitted structure (25) comprising a first woven or knitted fabric (26) and a first layer of a first polymeric composition (34), the first woven or knitted fabric (26) being impregnated, at least in part, with the first polymeric composition (34);
- a second structure of revolution (27') formed by a second impregnated woven or knitted structure (27) comprising a second woven or knitted fabric (28) and a second layer of a second polymeric composition (36), the second woven or knitted fabric (28) being impregnated, at least in part, with the second polymeric composition (36);
- a bearing structure (30) comprising bearing elements (32) connecting the first and second woven or knitted fabric(s) (26, 28) together;
- a sacrificial means (62) for temporarily holding the first and second impregnated woven or knitted structures with respect to one another, the first impregnated woven or knitted structure (25), the second impregnated woven or knitted structure (27), the bearing structure (30) and the sacrificial means (62) forming an assemblage (24);
- a crown structure of revolution (55) arranged radially outside the first structure of revolution (25');
- an interior annular space (52) delimited by an internal face (42) of the first structure of revolution (25') and an internal face (46) of the second structure of revolution (27');
- two sidewalls (50) connecting together each axial end (44) of the first, radially exterior, structure of revolution (25') and each axial end (48) of the second structure of revolution (27'), the two sidewalls (50) delimiting the interior annular space (52); the interior annular space (52) forming a closed cavity which can be pressurized by an inflation gas
and **in that** the sacrificial temporary holding means (62) is broken.

10. Fitted assembly (23), **characterized in that** it comprises a tyre (20) according to Claim 9 fitted to a fitting means (22) of the fitted assembly (23) on a vehicle.

11. Process for the manufacture of a tyre (20) according to Claim 9, **characterized in that:**
- an assembly (90) according to any one of Claims 1 to 8 is wound around a confection cylinder substantially of revolution around an axis of revolution; and
- at least one of the first and second impregnated woven or knitted structures (25, 27) is separated radially with respect to the axis of revolution so as to break the sacrificial temporary holding means (62).

12. Process according to the preceding claim, in which:
- the interior annular space (52) is formed;
- the interior annular space (52) is opened out so as to break the sacrificial temporary holding means (62).

13. Process according to the preceding claim, in which, in order to form the interior annular space (52), each sidewall (50) is joined to each axial end (44, 48) of the first and second structures of revolution (25', 27'), so as to form the interior annular space (52).

14. Process according to Claim 12 or 13, in which the interior annular space (52) is opened out by pressurization by an inflation gas of the interior annular space (52).

15. Process according to any one of Claims 12 to 14, in which, after the interior annular space (52) has been opened out, a crown structure of revolution (55) is wound radially on the outside of the first structure of revolution (25').
